# EUROPEAN PATENT SPECIFICATION

(11) **EP 4 139 231 B1**
(45) Date of publication and mention of the grant of the patent: **02.12.2026**
(21) Application number: 21721477.4
(22) Date of filing: 22.04.2021
(51) Int. Cl.: B65G 1/04, B60L 50/40, B65G 1/06, B65G 1/137

(54) **APPARATUS AND METHOD FOR CHARGING A LOAD HANDLING DEVICE ON A GRID**
VORRICHTUNG UND VERFAHREN ZUM LADEN EINER LASTHANDHABUNGSVORRICHTUNG AUF EINEM NETZ
APPAREIL ET PROCÉDÉ DE CHARGE D'UN DISPOSITIF DE MANIPULATION DE CHARGE SUR UNE GRILLE

(30) Priority: 24.04.2020 GB 202006089; 10.07.2020 GB 202010704
(43) Date of publication of application: 01.03.2023
(73) Proprietor: Ocado Innovation Limited, Hatfield, Hertfordshire AL10 9UL (GB)
(72) Inventor: FLYNN, Damian, HATFIELD Hertfordshire AL10 9UL (GB); BATES, Martyn, Hatfield Hertfordshire AL10 9UL (GB); CORSER, Philip, HATFIELD Hertfordshire AL10 9UL (GB); CHIVERTON, Simon, Hatfield Hertfordshire AL10 9UL (GB); NADAL, Javier, Hatfield Hertfordshire AL10 9UL (GB); PASSETTI, Giovanni, Hatfield Hertfordshire AL10 9UL (GB)
(74) Representative: Ocado Group IP Department
(86) International application number: PCT/EP2021/060514
(87) International publication number: WO 2021/214206

(56) References cited:
- WO-A1-2015/019055
- WO-A1-2020/026900
- JP-A- 2020 022 262
- US-A1- 2016 325 932
- US-A1- 2017 326 995
- US-A1- 2018 086 558
- US-A1- 2019 176 655

## Description

### Technical Field

The present invention relates to the field of load handling devices for handling storage containers or bins in a store comprising a grid of stacked containers, more specifically of a charging system of a load handling device.

### Background

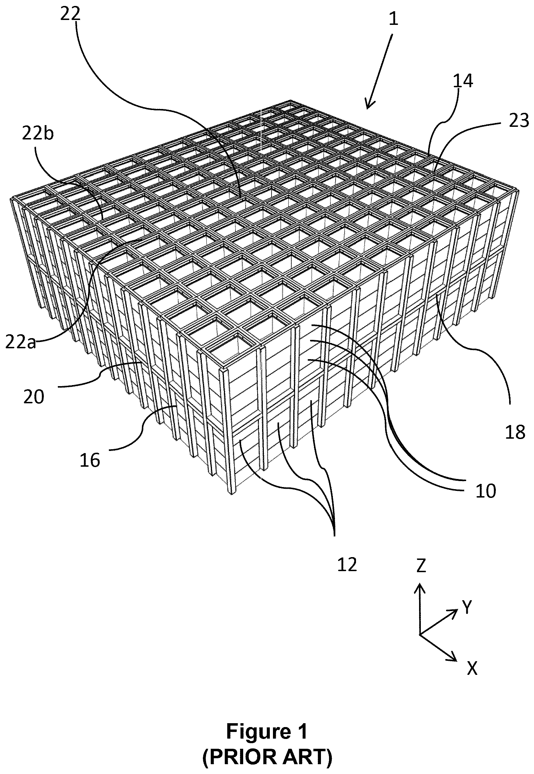

Storage systems comprising a three-dimensional storage grid structure, within which storage containers/bins are stacked on top of each other, are well known. PCT Publication No. WO2015/185628A (Ocado) describes a known storage and fulfilment system in which stacks of bins or containers are arranged within a grid framework structure. The bins or containers are accessed by load handling devices operative on tracks located on the top of the grid framework structure. A system of this type is illustrated schematically in Figures 1 to 3 of the accompanying drawings.

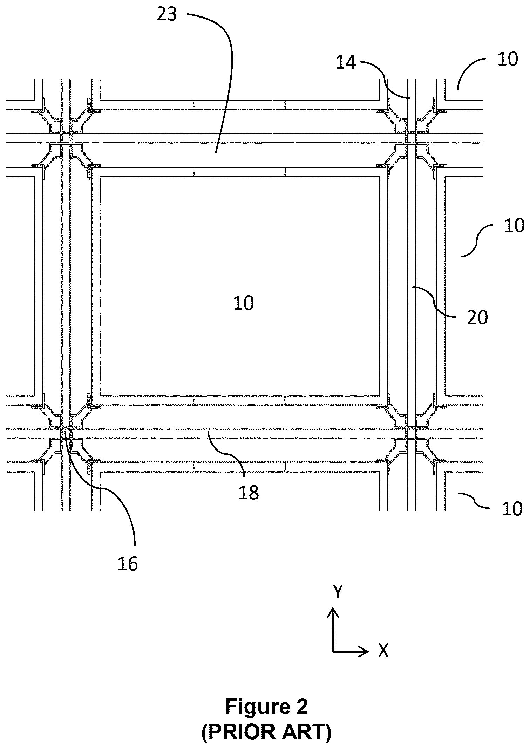

As shown in Figures 1 and 2, stackable containers, known as bins 10, are stacked on top of one another to form stacks 12. The stacks 12 are arranged in a grid framework structure 14 in a warehousing or manufacturing environment. The grid framework is made up of a plurality of storage columns or grid columns. Each grid in the grid framework structure has at least one grid column for storage of a stack of containers. Figure 1 is a schematic perspective view of the grid framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

The grid framework structure 14 comprises a plurality of upright members 16 that support horizontal members 18, 20. A first set of parallel horizontal members 18 is arranged perpendicularly to a second set of parallel horizontal members 20 to form a plurality of horizontal grid structures comprising a plurality of grid cells 23 supported by the upright members 16. The members 16, 18, 20 are typically manufactured from metal. The bins 10 are stacked within the grid cells 23 between the members 16, 18, 20 of the grid framework structure 14, so that the grid framework structure 14 guards against horizontal movement of the stacks 12 of bins 10, and guides vertical movement of the bins 10.

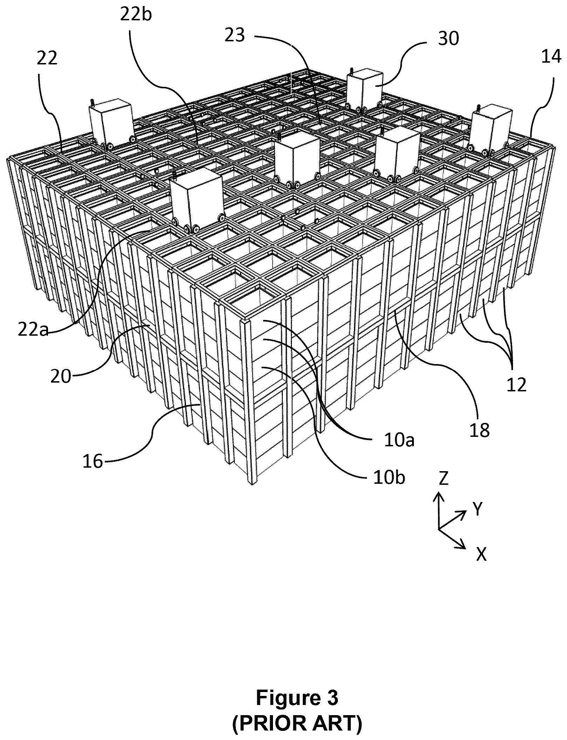

The top level of the grid framework structure 14 includes rails 22 arranged in a grid pattern comprising a plurality of grid cells 23 across the top of the stacks 12. Referring additionally to Figure 3, the rails 22 support a plurality of load handling devices 30. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

A known load handling device 30 shown in Figures 4 and 5 comprises a vehicle body 32 is described in PCT Patent Publication No. WO2015/019055 (Ocado), where each load handling device 30 only covers one grid space or grid cell 23 of the grid framework structure 14. Here, the load handling device 30 comprises a wheel assembly comprising a first set of wheels 34 consisting a pair of wheels on the front of the vehicle body 32 and a pair of wheels 34 on the back of the vehicle 32 for engaging with the first set of rails or tracks to guide movement of the device in a first direction and a second set of wheels 36 consisting of a pair of wheels 36 on each side of the vehicle 32 for engaging with the second set of rails or tracks to guide movement of the device in a second direction. Each of the set wheels are driven by one or more motors to enable movement of the vehicle in the X and Y directions respectively along the rails. One or both sets of wheels can be moved vertically to lift each set of wheels clear of the respective rails, thereby allowing the vehicle to move in the desired direction.

The load handling device 30 is equipped with a lifting device or crane mechanism driven by one or more motors to lift a storage container which can weight up to 30 kg from above. The crane mechanism comprises a winch tether or cable 38 wound on a spool or reel (not shown) and a grabber device 39. The lifting device comprise a set of lifting tethers 38 extending in a vertical direction and connected nearby or at the four corners of a lifting frame 39, otherwise known as a grabber device (one tether near each of the four corners of the grabber device) for releasable connection to a storage container 10. The grabber device 39 is configured to releasably grip the top of a storage container 10 to lift it from a stack of containers in a storage system of the type shown in Figures 1 and 2.

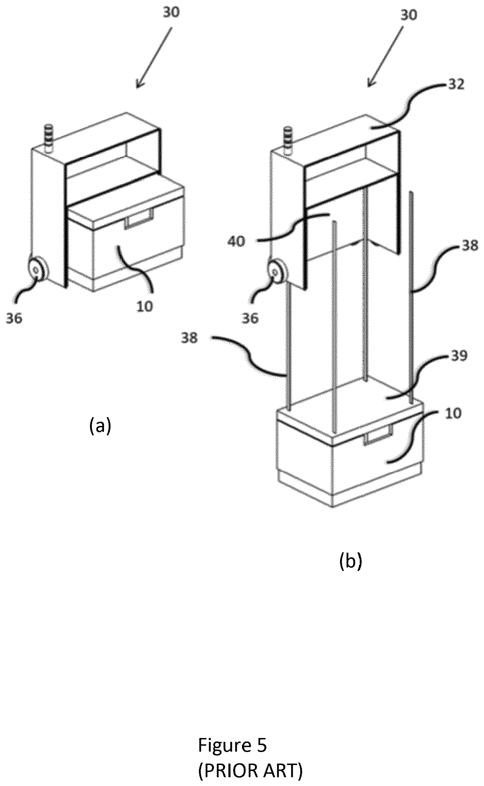

The wheels 34, 36 are arranged around the periphery of a cavity or recess, known as a container-receiving recess 40, in the lower part. The recess is sized to accommodate the container 10 when it is lifted by the crane mechanism, as shown in Figures 5(a) and 5(b). When in the recess, the container is lifted clear of the rails beneath, so that the vehicle can move laterally to a different location. On reaching the target location, for example another stack, an access point in the storage system or a conveyor belt, the bin or container can be lowered from the container receiving portion and released from the grabber device.

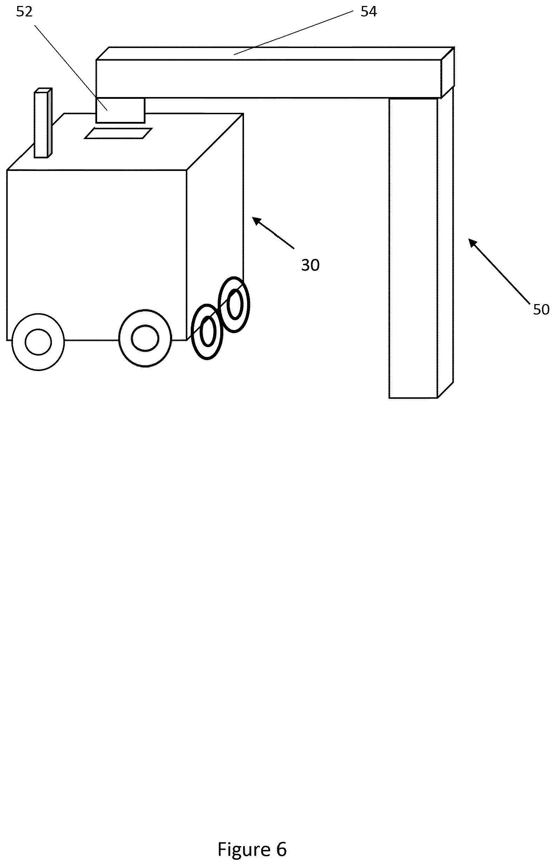

Although not shown in Figures 1-3, the load handling device 30 is powered during operation by an on-board rechargeable battery. Examples of rechargeable batteries are Lithium-Ion battery, Nickel-Cadmium battery, Nickel-Metal Hydride battery, Lithium-Ion Polymer battery, Thin Film battery and Smart battery Carbon Foam-based Lead Acid battery. The battery is recharged while the load handling device 30 is operative on the grid framework structure by a charge station 50 shown in Figure 6. The charge station 50 typically has an L shaped structure that is fixed proximate to the grid framework structure and extends over a nominal grid cell at an edge of the grid structure. The charge station 50 comprises a charge head 52 comprising charge contacts which are fixed in position relative to the charge station 50. The charge head is mounted to one arm 54 of the L shaped structure such that the charge head 52 is suspended over at least two grid spaces of the grid framework. A load handling device 30 may be charged by being instructed to move to a grid cell above which the charge head 52 is located. As the load handling device 30 moves into the grid cell, a contact is made between a charge contact pad on a top surface of the load handling device, and the charge contacts of the charge head. A charge is imparted to the load handling device from the charge contacts through the charge contact pad situated on the top surface of the load handling device.

However, a number of problems exist with the charge station. In particular, due to the movement of the robotic load handling device into the charge station, a clamping force exists between the charge contacts and the robotic load handling device. However, the magnitude of this force can cause problems to arise over a period of time. For example, repeated entries of the robotic load handling device into the grid cell above which the charge station is located causes a fatiguing of the charge station which will then require maintenance or replacement of the charge head and supporting structure. Moreover, vibration of the grid framework structure caused by movement of the robotic load handling devices negatively affects the alignment between the charge contacts of the charge station and the robotic load handling device. Moreover, grid cell damage, wear and material creep causes alignment issues between the charge contacts and the charge pad contacts negatively affecting the ability of the robotic load handling device to make contact with the charge contacts. Similarly, tolerances in both the manufacture of the grid framework structure and charge station and/or slight variation in installation alignment of the grid framework structure with respect to the charge station and/or thermal expansion of the grid framework structure with respect to the charge station can also cause alignment issues which negatively affect the ability of the robotic load handling device to make contact with the charge contacts. Moreover, the charge contacts wear with time and therefore, require periodic servicing or repair. However, the maintenance of the charge contacts requires human intervention on the top of the grid framework structure which can only be performed if the robotic load handling devices on top of the grid framework structure are in a "safe mode" rendering them inoperable. The downtime as a result of the load handling device being idle leads to a loss of production of the whole system. More importantly, as the battery requires a DC charge, the charge station is operative to deliver a DC charge. The power to drive the load handling device in the X and Y direction on the grid framework structure and the power to drive winch mechanism can increase from a peak of 600Watts to around 100 Watts when idle. To provide maximum operational time of the load handling device on the grid framework structure, the charge station delivers a charge of around 150amps to 160amps at about 48 volts to the rechargeable battery. This typically gives a charging frequency of every 15 minutes for every 4 hours of usage. However, as there is a need to supply a DC voltage to the rechargeable battery, the contacts between the charge head of the charge station and the charge pad of the load handling device are susceptible to arcing whenever the load handling device is mounted to or dismounted from the charge station which is some cases leads damage to the contact surfaces, e.g. pitting, and in an extreme cases a fire.

WO2019/215221 (Ocado Innovation Limited) tried to address this problem by providing a charge station in which a charge head is drawn towards the charge pad on the top surface of the load handling device. The charge unit comprises a plurality of profiled sections arranged to interface with a hoist element of the load handling device and a power transfer component arranged to transfer power to the load handling device when the hoist element engages with the plurality of profiled sections, 60. A hoist element located at the top of the load handling device used for manual movement of the load handling device. The hoist element comprises a cutaway below a bulbous head which gives rise to an underside. The hoist element is so designed to permit the attachment of a hoist to lift the load handling device from a grid cell. The power transfer component is typically composed of copper and outwardly biased by a resiliently member, e.g. a spring, so as to lessen the impact of the power transfer unit making contact with a charge pad on the top surface of the handling device . In addition to the power transfer unit, a cartridge comprises a plurality of charge contacts on its underside. Like the power transfer unit, the plurality of charge contacts are outwardly biased by resilient member, e.g. a spring, so as to lessen the impact of the charge contacts making contact with the charge pad on the top surface of the handling device. In contrast to the power transfer units, the additional charge contacts may be for the purpose of preventing arcing between the power transfer units or data transfer during charging. Other methods include by providing a control system that isolates the charge to the charge head prior to the load handling device dismounts from the charge station.

The plurality of profiled sections and the power transfer unit are arranged in the moveable cartridge such that contact between the hoist element and the plurality of profiled sections causes movement of the cartridge towards the load handling device and thereby, control the amount of clamping force of the cartridge, in particular the power transfer unit with the charge pad at the top surface of the load handling device. Together with the resiliently biased power transfer units and/or the plurality of resiliently biased charge contacts, damage/wear to the cartridge and/or the top surface of the robotic load handling device is minimised.

Whilst attempts have been made to mitigate arcing and thus, damage between the contact surfaces of the charge head and the contact surface of the charge receiving pads on the load handling device, the risk of arcing between the contact surfaces still exists in the industry.

Secondly, the relatively long charging time of the rechargeable battery which are largely based on a Lithium-Ion battery, Nickel-Cadmium battery, Nickel-Metal Hydride battery, or Lithium-Ion Polymer battery, which can be as long as a couple of hours, represents a significant downtime a load handling device remains inactive or inoperative on the grid framework structure. Where a number of load handling devices are operative on the grid framework to fulfil orders purchased online within a given time slot, having one or more load handling devices remain idle for a significant amount of time has a detrimental impact on the ability of a fulfilment or distribution warehouse fulfilling orders in a timely manner. This is particularly the case where the load handling device contributes to a logistical system that provides home delivery of goods to a customer's premises, e.g. home delivery, upon receipt of an order of goods. Here, delivery information containing delivery addresses are used by online retailers such as Amazon and UK's Ocado to deliver goods to the customer's delivery address. To mitigate such a problem, online retailers such as UK's Ocado provide a buffer of load handling devices operative on the grid framework to cater for load handling devices that remain idle for charging. In an extreme case, timeslots for the delivery of orders are extended to cater for this downtime.

Thirdly, the effectiveness of batteries which are largely based on a Lithium-Ion battery, Nickel-Cadmium battery, Nickel-Metal Hydride battery, or Lithium-Ion Polymer battery rely on a chemical reaction to store electrical energy diminishes after repeated charging due to the breakdown of the lithium ion cells and therefore, the ability of the battery to store charge for a prolonged period of time diminishes over time.

A storage system is thus required that:
i) allows a load handling device to be charged safely, and/or
ii) allows a rechargeable energy storage means to be charged rapidly in comparison to conventional batteries, and/or
iii) allows the rechargeable energy storage means to undergo multiple cycles of charging and discharging without affecting the storage capacity of the rechargeable energy storage means and therefore increase lifetime of the rechargeable energy storage means.

In this specification, the terms "rechargeable energy storage means", "energy storage means", "rechargeable storage means", "rechargeable energy storage device", "rechargeable storage device", and "rechargeable power source" are used interchangeably.

This application claims priority from GB application numbers GB2006089.3 filed 24^{th} April 2020 and GB2010704.1 filed 10^{th} July 2020.

### Summary of Invention

The present invention has mitigated the above problem by providing a load handling device for lifting and moving one or more containers stacked in a storage system comprising a grid framework structure supporting a pathway arranged in a grid pattern above the stacks of containers, the load handling device comprising:
i) a vehicle body housing a driving mechanism operatively arranged for moving the load handling device on the grid framework structure;
ii) a lifting device comprising a lifting drive assembly and a grabber device configured, in use, to releasably grip a container when in a lowered position and lift the container from the stack into a container-receiving space when in a raised position, wherein the lifting drive assembly and/or the driving mechanism comprises at least one motor forming an electrical load;
iii) a rechargeable energy storage means for providing energy to power the electrical load;
iv) a charging system comprising a first part for charging the rechargeable energy storage means comprising at least one electrical charge receiving element arranged on the vehicle body and a second part for delivering energy from the rechargeable energy storage means to the electrical load,
   wherein the second part of the charging system comprises a DC/DC converter positioned between the rechargeable energy storage means and the electrical load such that the DC/DC converter is configured to supply a predetermined DC voltage across the electrical load;
v) an auxiliary rechargeable energy storage means, wherein the electrical load is shared between the rechargeable energy storage means and the auxiliary rechargeable energy storage means, wherein the grabber device comprises the auxiliary rechargeable energy storage means;
wherein the vehicle body comprises a wireless charging transmitter coil and the grabber device comprises a wireless charging receiver coil for inductively coupling with the wireless charging transmitter coil when the grabber device is in the raised position.

The rechargeable energy storage means can be a rechargeable batteries including but not limited to Lithium-Ion battery, Nickel-Cadmium battery, Nickel-Metal Hydride battery, Lithium-Ion Polymer battery, Thin Film battery and Smart battery Carbon Foam-based Lead Acid battery. Optionally, the rechargeable energy means can be an assembly of one or more supercapacitor modules. For the purpose of the present invention, the phrase "an assembly of one or more supercapacitor modules", "a bank of one or more supercapacitor modules" and "supercapacitor modules" are used interchangeably in the present application to describe a bank of one or more supercapacitor modules. For the purpose of the present application, the term "at least one electrical charge receiving element", "at least one charge receiving element" and "charge receiving element" are used interchangeably throughout the patent specification to describe "at least one electrical charge receiving element". Likewise, the term "at least one electrical charge providing element", "at least one charge providing element" and "charge providing element" are used interchangeably throughout the patent specification to describe "at least one electrical charge providing element". Optionally, the vehicle body houses the lifting device comprising the lifting drive assembly and the grabber device such that the grabber device is configured, in use, to releasably grip a container and lift the container from a stack in the framework into a container-receiving space. The container receiving space may comprise a cavity or recess arranged within the vehicle body, e.g. as described in WO 2015/019055 (Ocado Innovation Limited). Alternatively, the vehicle body of the load handling device may comprise a cantilever as taught in WO2019/238702 (Autostore Technology AS) in which case the container receiving space is located below a cantilever of the load handing device. In this case, the grabber device is hoisted by a cantilever such that the grabber device is able to engage and lift a container from a stack into a container receiving space below the cantilever. Optionally, the vehicle body houses the assembly of one or more supercapacitor modules for providing energy to power the electrical load. Optionally, the pathway comprises a plurality of rails or tracks. The plurality of rails or tracks are arranged in a grid pattern.

Supercapacitors are advantageous over other type of rechargeable energy storage means such as batteries in that they can be rapidly charged in the order of seconds and have a longer life time than conventional batteries, and thus, have the ability to store large amounts of power over a relatively short period of time. This allows fast recharging of the supercapacitor modules, reducing any recovery time due to charging. Other advantageous include an increased life cycle length compared to batteries. Batteries are only able to manage a certain number of charging and discharging cycles and capacitors can manage significantly more.

Whilst supercapacitors have an ability to be rapidly charged to full capacity, the reverse is also true on discharge. Like traditional capacitors, supercapacitors have a tendency to lose their charge/power quicker than conventional batteries. Supercapacitors (also known as ultracapacitors) are a type of capacitors which does not have a conventional solid dielectric, but instead employ an electrolyte between two electrodes in which virtual plates are formed by the action of the electrodes on the electrolyte. Specifically, a double layer is formed between the surface of the electrode and the electrolyte, and there is a charge separation across this double layer which enables the electrostatic storage of electrical energy - hence, this type of supercapacitor is therefore known as an "electric-double layer capacitor". Typically, the electric-layer capacitor employ a separator to prevent the electrodes from contacting each other. Supercapacitors generally have advantage in applications where a large amount of power is required for a relatively short time or where a very high number of charge/discharge cycles is anticipated or a longer lifetime is needed. In comparison to supercapacitors, the discharge rate or time of batteries, e.g. Lithium-ion batteries, which are largely based on a chemical reaction is much lower and therefore, able to hold charge for longer period of time.

Supercapacitor has a linear discharge voltage and therefore, the output voltage of a supercapacitor has a tendency to fall below the minimal operating voltage of the electrical load running on the assembly of one or more supercapacitors. The electrical load comprises at least one motor for operating the driving mechanism and/or the lifting drive assembly. To mitigate this drop in operational voltage, a DC/DC convertor is used to maintain the voltage above the minimal operational voltage across the electrical load. The DC/DC converter comprises a power stage and a control circuit. The power stage includes one switching cell (e.g. a transistor and a diode) and an output filter (e.g. an inductor and a capacitor). The output voltage of the DC/DC converter is adjusted by adjusting the duty cycle of the switching cell. Preferably, the DC/DC converter is a buck converter to step down the input DC voltage from the bank of supercapacitor modules to the operational voltage across the electrical load. This is particularly the case where the discharge time of the bank of supercapacitor modules is increased by increasing the charge voltage above the operational voltage of the electrical load across a bank of supercapacitor modules, i.e. allows more time for discharge of the supercapacitor modules. The DC/DC converter then steps down the output voltage across the bank of one or more supercapacitor modules to the operational voltage of the electrical load. Optionally, the DC/DC converter is a boost converter to step up the input voltage from the bank of supercapacitors modules to the operational voltage across the electrical load and is particularly important when the discharge voltage across the bank of supercapacitor modules falls below the operational voltage. More preferably, the DC/DC converter is a combination of a buck-boost converter to cater for both scenarios.

In comparison to the assembly of one or more supercapacitor modules, the DC/DC converter can also be used to extend the usefulness of a rechargeable battery by supplying a voltage above or equal to the operating voltage across the electrical load. For example, the DC/DC converter can be used to buck or boost the voltage from the rechargeable battery to the operating voltage across the electrical load. This has the advantage of extending the operational time the rechargeable battery is able to supply an operational voltage to the electrical load when the voltage from the rechargeable battery falls below the operational voltage of the electrical load. As a result, a much higher voltage rechargeable battery can be used in combination with a buck converter to step down the voltage from the rechargeable battery to the operational voltage of the electrical load. In other words, allows a higher voltage rechargeable battery to be used so as to extend the operational time of the load handling device operational on the grid framework structure before the voltage across the rechargeable battery falls below the operational voltage.

Preferably, the voltage across the rechargeable battery is greater than the voltage across the predetermined voltage across the electrical load. Equally, a boost converter can be used in combination with the rechargeable battery to step up the voltage across the rechargeable battery and thereby, extending the operational time of the rechargeable battery to supplying power to the electrical load. For example, when the voltage across the rechargeable battery falls below the operational voltage of the electrical load, the boost converter can step up the voltage from the rechargeable battery. Optionally, a buck converter can be used to step down the voltage form the rechargeable battery to the operational voltage of the electrical load. Optionally, the DC/DC converter is a buck/boost converter.

Supercapacitors also has a relatively low specific energy in comparison to batteries, e.g. Li-ion batteries, which have a relatively large specific energy. The specific energy is a measure of the total amount of energy stored in a rechargeable energy storage means divided by its weight. Therefore, more weight of supercapacitor modules (connected in series and parallel) are required to provide the same level of charge capacity as a battery. The amount of charge that a capacitor can store is dictated by the product of its capacitance and the voltage applied across the capacitor in accordance with the equation: $Q = VC$ (1)

Since the discharge of a supercapacitor follows a linear discharge pattern, i.e. the voltage across the supercapacitor drops as the supercapacitor discharges, combining multiple supercapacitor modules in series and in parallel offers the ability to increase the maximum voltage across a bank of supercapacitor modules whilst maintaining the capacitance. Thus, a greater voltage can be applied across a bank of one or more supercapacitor modules and thereby, increasing the period of time by which the residual voltage across the bank of supercapacitor modules being above the "useful" operational voltage of the electrical load. The residual voltage being the voltage that remains across the supercapacitor as it begins to discharge. Thus, for a given voltage, the increased ability to store more charge in the assembly of one or more supercapacitor modules increases the ability of the bank of supercapacitor modules to deliver a charge at a predetermined voltage over a longer period of time resulting in an increased discharge time. By combining one or more supercapacitors modules in series increases the maximum voltage that can be applied across the bank of supercapacitor modules. Equally and applicable in the present invention, each module in a bank of one or more supercapacitor modules comprises one or more supercapacitor cells connected in series and/or parallel to provide a required rated charge voltage and capacitance. Thus, the charge voltage and the capacitance of the bank of one or more supercapacitor modules can be tailored by combining one or more supercapacitor modules together, each module having a given maximum charge voltage.

The increased voltage allows an increased amount of charge to be delivered to the one or more supercapacitors modules over a shorter period of time at a higher voltage rather than over a longer period of time at a lower voltage to generate the same level of power in accordance to the equation: $P = I \times V$ (2)

Preferably, each of the bank of one or more supercapacitor modules has a capacitance in the range 130F to 188F and a nominal maximum voltage rating in the range 48 volts to 62.1 volts, more preferably a capacitance of 130F and a nominal voltage of 62.1 volts. The nominal voltage otherwise known as charge voltage represents the voltage that can be safely applied across the supercapacitor without damaging the supercapacitor. If a supercapacitor is exposed to an excessive voltage for extended periods of time it will gradually degrade to essentially an open circuit condition. According to the present invention, multiple supercapacitors can be connected in series to increase the maximum voltage of the supercapacitors.

To increase safety in an event that a person accidently shortens the contact surfaces of the assembly of one or more supercapacitor modules, preferably, the charging system further comprises an isolating switch positioned between the at least one electrical charge receiving element and the assembly of one or more supercapacitor modules and wherein a controller is operative to electrically isolate the at least one electrical charge receiving element from the assembly of one or more supercapacitor modules. More preferably, the controller is configured to actuate the isolating switch in response to the voltage across the assembly of one or more supercapacitor modules reaching a predetermined voltage. This is particularly important where a supercapacitor can rapidly discharge a high amount of charge over a short period of time in comparison to other forms of energy storage means such as a battery. Such rapid discharge can be a potential health hazard should a person, e.g. during maintenance, inadvertently shortens the contact surfaces of a supercapacitor module. For example, a bank of one or more supercapacitors modules can store in excess of 100kW of power which can rapidly deliver a high current over a very short period of time. The isolating switch isolate the bank of supercapacitor modules from the at least one electrical charge receiving element.

There is positive power consumption by the at least one motor of the electrical load which peaks when the load handling device accelerates on the grid framework structure as more energy is consumed by the at least one motor of the electrical load. The converse is true when the load handling device decelerates as the least one motor of the electrical load generate energy, i.e. negative power consumption. To capture this regenerative energy, preferably, the charging system comprises a bypass switch having a first position to allow electrical energy to flow from the assembly of one or more supercapacitors to the electrical load through the DC/DC converter (i.e. to allow the electrical load to draw current from the assembly of one or more supercapacitors at a predetermined voltage via the DC/DC converter) and a second position to bypass the DC/DC converter such that electrical energy regenerated by the electrical load bypasses the DC/DC converter to the assembly of one or more supercapacitors. Preferably, the charging system further comprises a controller operative to actuate the bypass switch from the first position to the second position in response to a signal from a controller. Preferably, the controller is operative to actuate the bypass switch to the second position when the electrical load exceeds a predetermined voltage. This is because the electrical load, i.e. the at least one motor, generates a voltage during deceleration of the load handing device in addition to the voltage provided across the assembly of one or more supercapacitor modules.

To provide a predetermined voltage below or equal to the maximum charge voltage across the assembly of one or more supercapacitor modules during charging of the load handling device at a charge station, preferably the DC/DC converter is a first DC converter and the first part of the charging system further comprises a second DC/DC converter upstream of the first DC/DC converter, said second DC/DC converter is positioned between the at least one charge receiving element and the assembly of one or more supercapacitor modules. The assembly of one or more supercapacitor modules is positioned between the first part of the charging system and the second part of the charging system. For the purpose of explanation of the present invention and to keep consistency with the terminology used in the present invention, the DC/DC converter between the assembly of one or more supercapacitor modules and the electrical load is defined as a first DC/DC converter and the DC/DC converter positioned between the at least one charge receiving element and the assembly of one or more supercapacitor modules is defined as a second DC/DC converter. The first and the second DC/DC converter are respectively configured to maintain a steady predetermined voltage across the electrical load and across the assembly of one or more supercapacitor modules. The second DC/DC converter ensures that the voltage is maintained at a safe level to prevent overcharging of the assembly of one or more supercapacitor modules. The second DC/DC converter ensures that the voltage across the assembly of one or more supercapacitor modules is regulated to a safe level, i.e. either stepped up or down. Power from the assembly of one or more supercapacitor modules is consumed by an electrical load. For the purpose of the present invention an electrical load is a load that consumes power from the assembly of one or more supercapacitor modules. In an aspect of the present invention, the electrical load comprises at least one motor for driving the lifting drive assembly and/or the driving mechanism of the load handling device.

Preferably, the first part of the charging system further comprises an AC/DC convertor. The AC/DC converter supplies a DC at a predetermined voltage to the second part of the charging system. Preferably, the AC/DC converter is configured for supplying a DC at predetermined voltage across the assembly of one or more supercapacitor modules, i.e. positioned between the at least one charge receiving element and the assembly of one or more supercapacitor modules. Optionally, the AC/DC converter is configured for supplying a DC at predetermined voltage across the second DC/DC converter, i.e. positioned between the at least one charge receiving element and the second DC/DC converter. By providing a charging system in a load handling device that is able to accept power from an AC power supply, more particularly at the charge head of a charge station, the problem of arcing is dramatically reduced or non-existent as the voltage and the current are constantly changing and reversing, i.e. arcs in AC systems are self-extinguishing and therefore, there is much less risk for damage from arcing. Preferably, the second DC/DC converter is positioned between the AC/DC converter and the assembly of one or more supercapacitor modules. Optionally, the AC/DC converter is a three phase rectifier such that the at least one electrical charge receiving element comprises three electrical charge receiving contact surfaces for electrically coupling to three electrical charge providing contact surfaces of a three phase AC electrical power source. To regulate the voltage from the AC/DC converter, the second DC/DC converter is configured to draw current at a predetermined DC voltage to be applied across the assembly of one or more supercapacitor modules.

The demand on the assembly of one or more supercapacitor modules can vary significantly from operating the driving mechanism to moving the load handling device from one grid cell to another grid cell on the grid framework structure, operating the directional change of the load handling device to operating the lifting mechanism for picking a container or tote from within the grid framework structure which can weigh up to 30kg vertically up a storage column. In real terms, the load of the load handling device operable on the grid framework can range from 100 W to a peak in excess of 600 W over a four hour period and will cause one or more spikes in the electrical load. Such sudden spikes in the load is not ideal as it puts the assembly of one or more supercapacitor modules under undue stress. To filter or smooth out such spikes from the electrical load as well as providing means to store surplus energy in the assembly of one or more supercapacitor modules, preferably the assembly of supercapacitors comprises a first assembly of one or more supercapacitor modules and a second assembly of one or more supercapacitors. More preferably, the assembly of one or more supercapacitor modules is a first assembly of one or more supercapacitor modules and the load handling device further comprises a second assembly of one or more supercapacitor modules downstream of the first assembly of one or more supercapacitor modules, said second assembly of one or more supercapacitor modules is positioned between the first DC/DC converter and the electrical load such that first DC/DC converter is configured to supply a predetermined voltage across the second assembly of one or more supercapacitor modules.

As a result, the first DC/DC converter is positioned between the first assembly of one or more supercapacitor modules and the second assembly of the one or more supercapacitor modules and the second DC/DC converter is positioned between the at least one charge receiving element and the first assembly of one or more supercapacitor modules. The first and the second DC/DC converters are respectively configured to maintain a steady predetermined voltage across the second assembly of one or more supercapacitor modules and the first assembly of one or more supercapacitor modules and thereby, prevent overcharging of the supercapacitor modules. Preferably, the first DC/DC converter is a boost converter to step up the DC voltage from the first assembly of one or more supercapacitor modules, as the first bank of supercapacitor modules discharges to charge the second assembly of the one or more supercapacitor modules, i.e. the boost converter extracts current from the first assembly of the one or more supercapacitor modules and delivers power to the second assembly of the one or more supercapacitor modules at a predetermined voltage. The first DC/DC converter maintains a steady voltage across the second assembly of the one or more supercapacitor modules as power is consumed by the electrical load. Preferably, second DC/DC converter is a buck converter to step the DC voltage down from the power source, e.g. AC/DC converter, during charging at a charge station to the first assembly of the one or more supercapacitor modules and thereby, preventing overcharging the first (main) assembly of the one or more supercapacitor modules.

The load handling device further comprises an auxiliary energy storage means, wherein the electrical load is shared between the assembly of one or more supercapacitor modules and the auxiliary energy storage means. More preferably, the auxiliary energy storage means is one or more batteries, e.g. a lithium-ion battery. Combining the two into a hybrid energy storage means satisfies both needs (rapid charging and long term energy) and reduces stress on the assembly of one or more supercapacitor modules, which reflects in a longer service life.

Preferably, the grabber device comprises a frame comprising four corner sections, a top side and a bottom side and at least two gripper elements for engaging with a container, the lifting drive assembly comprises a winch mechanism comprising a winch cable having one end wound on a spool or reel and a second end connected to the grabber device such that the lifting drive assembly is arranged to move the grabber device in a vertical direction from a raised position within the vehicle body to a lowered position, and wherein the electrical load further comprises one or more rotary solenoids for actuating each of the at least two gripper elements. Optionally, the grabber device comprises the auxiliary rechargeable energy storage means, e.g. mounted to the frame of the grabber device. By offloading some of the energy of the electrical load to the auxiliary energy storage means, the load handling device of the present invention is able to conserve power of the assembly of one or more supercapacitor modules, for example, for driving mechanism and the lifting mechanism and thereby, increase the longevity of the main assembly of one or more supercapacitor modules operational on the grid framework structure. As the grabber device uses a small amount of power to actuate the gripper elements, the auxiliary rechargeable energy storage means does not have to be as large as the main assembly of one or more supercapacitor modules. The auxiliary rechargeable energy storage means can be a battery, e.g. a Li-ion battery, or an additional supercapacitor, i.e. with a smaller specific energy. Charging of the auxiliary rechargeable energy storage means can occur when the grabber device is in a raised position within the vehicle body of the load handling device. The vehicle body comprises an auxiliary charge providing element and the grabber device comprises an auxiliary charge receiving element, the auxiliary charge receiving element is arranged to electrically or magnetically couple with the auxiliary charge providing element when the grabber device is in the raised position. Optionally, the container receiving space of the vehicle body comprises two charge pads providing a direct current, i.e. one of the charge-providing pads is DC- and the other is DC+ that mates with corresponding two charge receiving pads on grabber device to deliver a DC charge to the auxiliary rechargeable energy storage means on the grabber device.

The auxiliary charge providing element is a wireless charging transmitter coil and the auxiliary charge receiving element is a wireless charging receiver coil for inductively coupling with the wireless charging transmitter coil when the grabber device is in a raised position. A suitable auxiliary AC/DC converter in the grabber device can convert the charge induced in the auxiliary charge receiving element to a suitable DC voltage for charging the auxiliary rechargeable energy storage means of the grabber device. Optionally, the grabber device can be based on a charging system described above for charging the assembly of one or more supercapacitor modules, i.e. comprising a first part for receiving power from an auxiliary electrical power supply and a second part downstream of the first part for delivering energy from the auxiliary electrical energy storage means to power the gripper elements, wherein the first part comprises at least one auxiliary electrical charge receiving element arranged on the grabber device.

In the aspect of the present invention where the first part of the charging system comprises an AC/DC convertor configured for supplying a DC supply at predetermined voltage across the second part of the charging system, the least one charge receiving element is construed to cover any means to allow energy to flow from the charge providing element and includes but are not limited to physical contact between the contacts surfaces of an AC power source, as well as non-contact charging with an AC power source e.g. wireless charging. For the purpose of the present invention, the least one charge receiving element is broadly construed to be a power coupling that couples with the at least one charge providing element of the charge station to transfer power from the charge station to the charging system of the load handling device. By having a charging system incorporating an AC/DC converter in the load handling device, the load handling device is able to receive a charge from an AC power source. The AC/DC convertor transforms the AC charge input from the AC power supply to a DC charge suitable to charge the assembly of one or more supercapacitor modules. In combination with an AC/DC converter, the charging system of the present invention further comprises a DC/DC converter to regulate the DC voltage from the AC/DC converter to a voltage necessary to safely charge the assembly of one or more supercapacitor modules.

Preferably, the AC/DC convertor is a rectifier, more preferably a three phase rectifier for converting three phase AC supply into a DC supply. Where the rectifier is a three phase rectifier, the at least one electrical charge receiving element comprises three electrical charge receiving contact surfaces for electrically coupling (engageable with) to a three electrical charge providing contact surfaces of a three phase AC electrical power source of the charge head. The use of three phase over single phase AC power supply that uses two conductors (phase and neutral) offers the advantage of providing two times as much power using just 1.5 times as many wires than a single phase supply. Thus, the ratio of capacity of conductor material is doubled, i.e. 3:1, whilst providing twice times as much power compared to a single phase AC power supply. In other words, less cabling is thus required to provide the same level of power than using a single phase AC supply.

Optionally, the three electrical charge receiving contact surfaces comprises three annular rings concentrically arranged for electrically coupling with corresponding concentrically arranged three annular rings of the charge head. For example, the three electrical charge providing surfaces of a power transfer unit of the charge station is typically composed of copper and outwardly biased by a resiliently member, e.g. a spring, so as to lessen the impact of the power transfer unit making contact with the contact surfaces on the vehicle body of the handling device. Preferably, the three phase rectifier is rated to transform an AC supply to provide a DC output in the range 130amps to 160amps at a nominal voltage of 48 volts.

Alternatively, instead of the need to establish a physical contact between the contact surfaces of the at least one electrical charge receiving element and the charge providing element at the charge station in order to transfer power to the charging system of the present invention, the at least one electrical charge receiving element comprises a wireless charging receiver coil for inductively coupling with a wireless charging transmitter coil. As is commonly known in the art, wireless charging comprises two coils in close proximity but separated by a gap, typically an air gap. One coil (transmitter coil) acts as a wireless power transmitter and is mounted to the charge station. The other coil (receiver coil) acts as the receiver of wireless power and forms part of the charging system of the load handling device. An AC current flowing in the transmitter coil produces a time varying magnetic field. The time varying magnetic field induces current in the receiver coil according to Faraday's law, which can be used to charge the assembly of one or more supercapacitor modules via an AC/DC converter. In comparison to physically engaging the contact surfaces or pads of the charging receiving element with the contact surfaces of the charge head of the charge station, wireless charging offers the ability to charge the assembly of one or more supercapacitor modules without the need to physically contact the charge contact surfaces. Wireless charging offers the advantage that a high voltage can be induced into the wireless charge receiving coil of the charging system. From a safety consideration, physically engaging the contact surfaces of the load handling device connected to a high voltage source at the charge station is less desirable as a voltage source as low as 50 volts can lead to severe injury or even death if accidental contact is made with the contact surface delivering a high voltage. Wireless charging removes the need for any physical contact being made with the charge head of the charge station and therefore, offers improved safety should accidental contact be made with the contact surfaces of the charge head at the charge station. The removal of any physical contact between the contact surfaces of the charge station and the load handling device when charging the assembly of one or more supercapacitor modules also mitigates the need to repair or even replace the contact surfaces or pads between the charge station and the load handling as a result of wear and tear. Previously, wear and material creep can cause alignment issues between the contact surfaces of the charge station and the charge head that can negatively affect the ability of the load handling device making contact with the charge providing contacts of the charge station.

Since there is no physical contact between the charge head of the charge station and the charge receiving surface of the load handling, the wireless charging receiver coil can be mounted to any of the walls of the vehicle body. Preferably, the at least one electrical charge receiving element is arranged on at least one wall of the vehicle body. Optionally, the at least one wall of the vehicle body is at least one sidewall of the vehicle body. Optionally, the at least one electrical charge receiving element is duplicated on one or more walls of the vehicle body so as to allow the assembly of one or more supercapacitor modules to be charged from different sides or faces of the vehicle body rather than from a single face of the vehicle body. This reduces the number of manoeuvres that the load handling device would need to perform to electrically couple to the charge head of the charge station.

An embodiment of the present invention provides a storage system comprising:
i) a grid framework structure comprising a plurality of upright columns arranged to form a plurality of vertical storage locations for one or more containers to be stacked between the upright columns and be guided by the upright column in a vertical direction, wherein the plurality of upright columns are interconnected at their top ends by a first set of grid members extending in a first direction and a second set of grid members extending in a second direction, the second set of grid members running transversely to the first set of grid members in a substantially horizontal plane to form a grid structure comprising a plurality of grid cells;
ii) one or more load handling devices for lifting and moving containers stacked in the grid framework structure, each of the one or more load handling devices comprising the load handling device according to the present invention described above,
iii) a charge station comprising a charge head for electrically coupling with the at least one electrical charge receiving element of the load handling device.

In another embodiment of the present invention, a storage system is provided comprising:
i) a grid framework structure comprising a plurality of upright columns arranged to form a plurality of vertical storage locations for one or more containers to be stacked between the upright columns and be guided by the upright column in a vertical direction, wherein the plurality of upright columns are interconnected at their top ends by a first set of grid members extending in a first direction and a second set of grid members extending in a second direction, the second set of grid members running transversely to the first set of grid members in a substantially horizontal plane to form a grid structure comprising a plurality of grid cells;
ii) one or more load handling devices for lifting and moving containers stacked in the grid framework structure, each of the one or more load handling devices comprising the load handling device according to the present invention described above,
ii) a charge station comprising a charge head electrically coupled to an AC power source, said charge head comprising a wireless charging transmitter coil for inductively coupling with the wireless charging receiver coil of the load handling device

The relatively low specific energy in comparison to batteries has meant that supercapacitors would need to be frequently charged to deliver the same level of charge at a given voltage over a longer period of time. However, in comparison to batteries, supercapacitors can be rapidly charged having a significantly less charging time in the order of seconds or minutes rather than hours. The present invention provides a charge optimisation system that takes advantage of the short charge time of supercapacitors whilst taking into account their short discharge time. The short charging time of supercapacitors can be used to their advantage in providing multiple charge stations to deliver short burst of energy to the supercapacitors whilst the load handling device is operational on the grid framework structure.

The present invention provides a charge optimisation system for charging a load handling devices in a storage system according to the present invention described above, the system comprising:
a control system for controlling the movement of the load handling device on the pathway,
wherein the load handling device is operable to communicate with the control system through a set of frequency channels established through a set of base stations and/or transponders, said control system comprising one or more processors configured to execute instructions to:
   i) carry out an operation to transport a container from a first position or location to a second position or location on the grid framework structure,
   ii) determine the amount of charge stored in the assembly of one or more supercapacitor modules of the load handling device,
   iii) determine the amount of charge required to carry out the operation,
wherein the one or more processors of the control system is further configured to execute instructions to the load handling device to visit a charge station to charge the assembly of one or more supercapacitor modules if the amount of charge in the assembly of one or more supercapacitor modules is less that the amount of charge required to carry out the operation.

The first position or location can be a first grid cell and the second position or location can be a second grid cell on the grid framework structure. For example, an operation can involve the load handling device being instructed to move along a pathway to pick and transport a container or tote from a first grid cell to a second grid cell. The load handling device preferably comprises a control unit which receives control signals from a radio communications unit of the control system or a central control system concerning information on where to pick up and deliver a container or tote in the grid framework structure. Energy consumed by the electrical load include propelling the load handling device from the first grid cell to the second grid cell and operating the lifting device to winch a container which can weigh as much as 30kg up and/or down a storage column between upright columns. The control system determines the amount of charge to carry out the operation and determines or measures the amount of charge stored in the assembly of one or more supercapacitor modules of the load handling device. If the amount of charge (energy) stored in the assembly of the one or more supercapacitor modules is less than the charge needed to perform the operation on the grid framework structure, then the control system sends instructions to the load handling device to visit a charge station to charge the assembly of the one or more supercapacitor modules. The operation includes the load handing device being instructed to pick a container from the first grid cell and transport the container to the second grid cell whereupon it is lowered into the second grid cell.

The charge optimisation system of the present invention instructs the load handling device to dock at one or more charge stations on route along the pathway when moving from the first grid cell to the second grid cell. Preferably, the one or more processors of the controller system is further configured to execute instructions to:
iv) select a pathway along the grid structure to carry out the operation based on the amount of charge stored in the assembly of one or more supercapacitor modules of the load handling device.

As the grid structure comprises a plurality of grid cells formed by intersecting grid members, a pathway is chosen on the grid structure to transport the container from the first grid cell to the second grid cell. The selection of the pathway takes into consideration the amount of charge stored in the assembly of one or more supercapacitor modules of the load handling device.

As the charge time is relatively short in comparison to batteries, e.g. a matter of seconds or minutes, the proportion of time the load handling device spends charging the assembly of one or more supercapacitor modules in comparison to the time to carry out the operation would not greatly influence the operation of the load handling device along the pathway within a given time. The charge optimisation system can be imagined as a relay where bursts of energy are supplied to the bank of supercapacitor modules when travelling along the pathway from one grid cell to another grid cell.

To conserve time, preferably the one or more charge stations is at the first position/location and/or at the second position/location. For example, the load handling device is instructed to recharge the assembly of one or more supercapacitor modules when the load handling device is parked at a first grid cell and/or the second grid cell, i.e. during a picking operation. In determining the amount of charge or energy required to carry out an operation, this may include the load handling device needing to charge at either the first grid cell and/or the second grid cell. As a picking operation typically takes about 30 seconds, recharging the bank of supercapacitor modules can be carried out contemporaneously during a picking operation or a decanting (lowering) operation. Optionally, the one or more charge stations can be along the pathway such that the load handling device makes a pit stop at the one or more charge stations as it moves along the pathway. For the purpose of the present invention, the pathway can include but are not limited to one or more charge stations being between a first grid cell and a second grid cell and/or one or more charge stations at the first grid cell and/or the second grid cell and/or one or more charge stations in a different position or location to being between the first grid cell and the second grid cell such that the pathway includes the load handling device being instructed to take a detour or a diversion to travel to and return from the one or more charge stations when traveling from a first grid cell to a second grid cell.

### Description of Drawings

Further features and aspects of the present invention will be apparent from the following detailed description of an illustrative embodiment made with reference to the drawings, in which:
Figure 1 is a schematic diagram of a grid framework structure according to a known system,
Figure 2 is a schematic diagram of a top down view showing a stack of bins or storage containers arranged within the framework structure of Figure 1.
Figure 3 is a schematic diagram of a system of a known load handling device operating on the grid framework structure.
Figure 4 is a schematic perspective view of the load handling device showing the lifting device gripping a container from above.
Figures 5(a) and 5(b) are schematic perspective cut away views of the load handling device of Figure 4 showing (a) the container receiving space of the load handling device and (b) a container accommodating the container receiving space of the load handling device.
Figure 6 is a schematic perspective view of a side view of the load handling device docked at a charging station according to a known arrangement.
Figure 7 is a schematic view showing the main electrical components of the charging system of the load handling device according to an exemplary embodiment of the present invention.
Figure 7b is a schematic view showing the main electrical components of the charging system of the load handling device, incorporating a DC/DC converter for auxiliary components, according to another exemplary embodiment of the present invention.
Figure 8 is a schematic view showing the main electrical components of the charging system incorporating AC/DC converter according to another exemplary embodiment of the present invention.
Figure 9 is a schematic view showing the main electrical components of the charging system incorporating wireless charging according to another exemplary embodiment of the present invention.
Figure 10 is a schematic view showing the main electrical components of the charging system incorporating a first and second DC/DC converter according to another exemplary embodiment of the present invention.
Figure 11 is a schematic view of an energetic scenario of two supercapacitor modules (Supercap 1 and Supercap 2) with identical energy content but different voltage and capacitance.
Figure 12 is a schematic view showing the main electrical components of the charging system incorporating an isolating switch to isolate the assembly of one or more supercapacitor modules according to another exemplary embodiment of the present invention.
Figure 13 is a schematic view showing the main electrical components of the regenerative system incorporating a bypass switch to bypass the DC/DC converter according to another exemplary embodiment of the present invention.
Figures 14(a), 14(b) and 14(c) are schematic views showing the stages of the regenerative system incorporating a bypass switch to bypass the DC/DC converter according to another exemplary embodiment of the present invention.
Figure 15 is a schematic view showing the main electrical components of the regenerative system incorporating a dual assembly of one or more supercapacitor modules according to another exemplary embodiment of the present invention.
Figure 16 is a schematic view showing the main electrical components of the hybrid system incorporating an auxiliary energy storage means according to another exemplary embodiment of the present invention.
Figure 17 is a schematic perspective view of a side view of the grabber device of the lifting device according to an embodiment of the present invention.
Figure 18 is a schematic perspective view showing the stage of engagement of the grabber device with a container according to an embodiment of the present invention.
Figure 19 is a schematic perspective view of a side view of the load handling device docked at a charging station in a second arrangement according to another exemplary embodiment of the present invention.
Figure 20 is a schematic perspective view of a side view of the load handling device docked at a charging station in a third arrangement according to another exemplary embodiment of the present invention.
Figure 21 is a Montecarlo simulation profile of the residual bot energy (load handling device) where the distance to the charge station is 28 grid cells.
Figure 22 is a Montecarlo simulation profile of the operative time of the load handling device where the distance to the charge station is 28 grid cells.
Figure 23 is a Montecarlo simulation profile of the recharge time of the load handling device where the distance to the charge station is 28 grid cells.
Figure 24 is a Montecarlo simulation profile of the ratio of the Operative time/Recharge time where the distance to the charge station is 28 grid cells.
Figure 25 is a Montecarlo simulation profile of the ratio of the Operative time/Recharge time where the distance to the charge station ranges from 0 grid cells, 14 grid cell and 28 grid cells.

### Detailed Description

It is against the known features of the storage system such as the grid framework structure and the load handling device described above with reference to Figures 1 to 6 that the present invention has been devised.

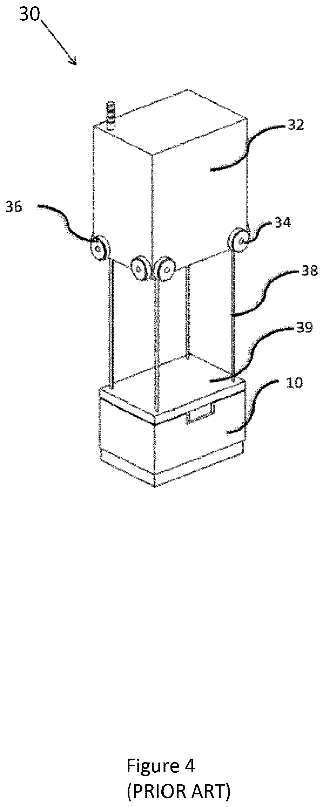

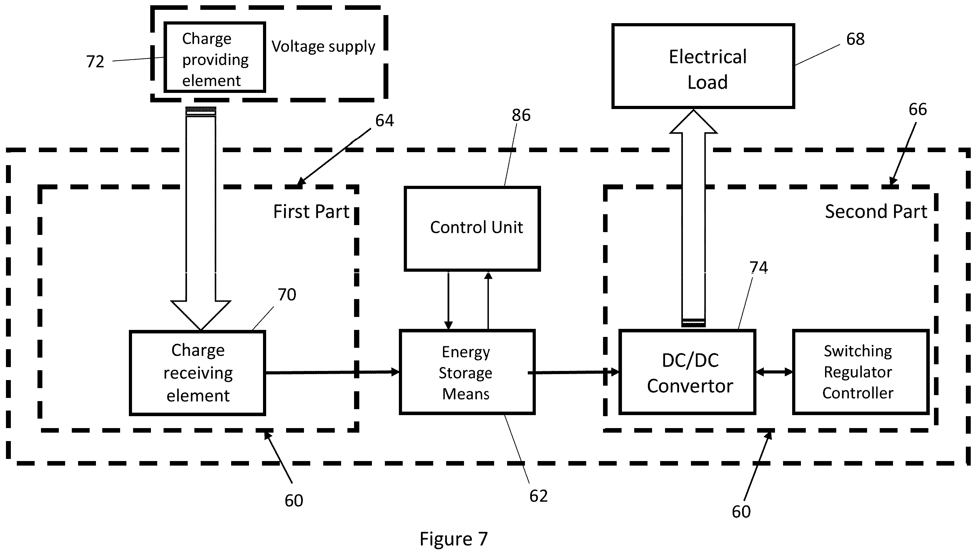

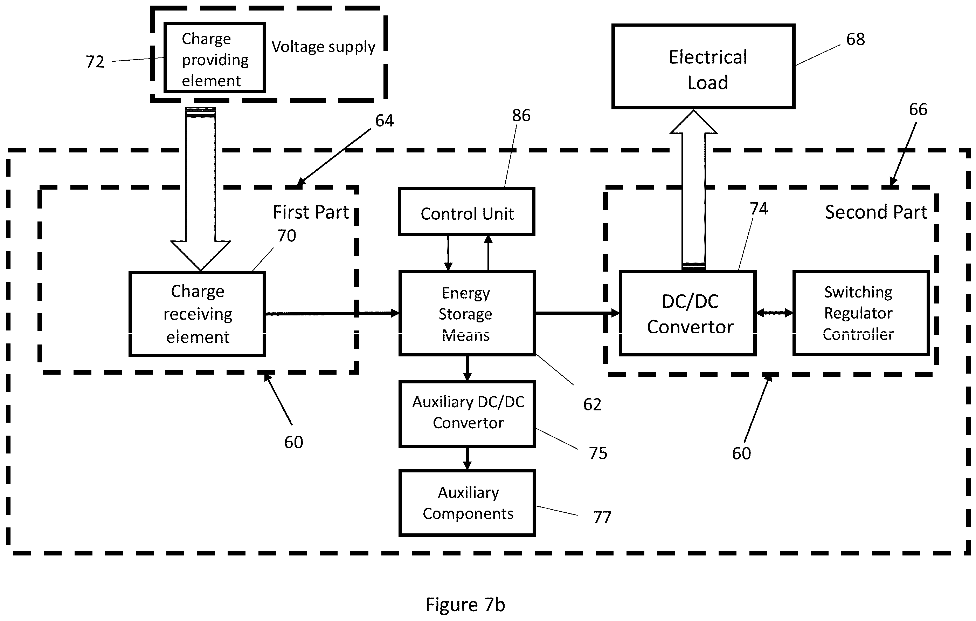

Figure 7 shows the main electrical components of a charging system 60 of a load handling device (otherwise known as a bot) according to an embodiment of the present invention. The load handling device is operative to move on a grid framework structure to transport one or more containers (otherwise known as totes) from one grid cell to another grid cell. As discussed with respect to Figure 4 and 5, the load handling device comprises a vehicle body housing a container receiving space and a lifting device comprising a lifting drive assembly and a grabber device configured, in use, to releasably grip a container and lift the container from the stack into the container-receiving space. Individual containers may be stacked in vertical layers, and their locations in the grid framework structure or "hive" may be indicated using co-ordinates in three dimensions to represent the load handling device or a container's position and a container depth (e.g. container at (X, Y, Z), depth W). Equally, locations in the grid framework structure may be indicated in two dimensions to represent the load handling device or a container's position and a container depth (e.g. container depth (e.g. container at (X, Y), depth Z). For example, Z=1 identifies the uppermost layer of the grid, i.e. the layer immediately below the rail or track system, Z=2 is the second layer below the rail or track system and so on to the lowermost, bottom layer of the grid. Whilst the container receiving space 40 for accommodating a container when it is lifted by the crane mechanism is arranged within the vehicle body 32 shown in Figures 5(a) and 5(b), the present invention is not limited to the container receiving space 40 being located within the vehicle body 32. The present invention is also applicable to the container receiving space being located below a cantilever such as in the case where the vehicle body of the load handling device has a cantilever construction as described in WO2019/238702 (Autostore Technology AS). For the purpose of the invention, the term 'vehicle body" is construed to optionally cover a cantilever such that the grabber device is located below the cantilever. However, for ease of explanation of the present invention, the container receiving space for receiving a container is described as being arranged within a cavity or recess within the vehicle body.

Similarly, whilst the particular embodiment of the present invention describes the load handling device travelling along rails or tracks, the load handling device can travel along any pathway on the grid framework structure and is not limited to travelling on rails or tracks. The pathway can be any surface including but not limited to rails or tracks.

The charging system 60 according to an embodiment of the present invention is incorporated within the load handling device and is configured to receive a charge from a power source for charging a rechargeable energy storage means or storage device 62. The rechargeable energy storage means 62 may be an assembly of one or more supercapacitor modules. Optionally, the rechargeable energy storage means can be a rechargeable battery including but not limited to Lithium-Ion battery, Nickel-Cadmium battery, Nickel-Metal Hydride battery, Lithium-Ion Polymer battery, Thin Film battery and Smart battery Carbon Foam-based Lead Acid battery. In other words, the charging system 60 according to an exemplary embodiment of the present invention can be used to supply charge to at least one rechargeable battery. The power source can be a DC or an AC power source. In the latter example, an AC/DC converter is incorporated into the charging system to convert the AC voltage at the charge station into a DC voltage for applying across the assembly of one or more supercapacitor modules. Optionally, the vehicle body houses the assembly of one or more supercapacitor modules for providing energy to power an electrical load.

For ease of explanation, the charging system 60 can be divided into a first part 64 that is arranged to receive a charge from a charge head of a charge station delivering a supply voltage and charging the rechargeable energy storage means (e.g. assembly of one or more supercapacitor modules) and a second part 66 for delivering the energy from the energy storage means or storage device 62 to the electrical load 68. The energy storage means is positioned between the first part 64 and the second part 66 of the charging system 60. The first part 64 of the charging system comprises a charge receiving element 70 that is arranged to receive a charge from the power source via a charge providing element 72. In an embodiment of the present invention, the charging receiving element 70 of the charging station 60 is arranged to physically contact the charge providing element 72 of the charge head of the charge station. In this embodiment, the charge receiving element 70 comprises contact pads or contact surfaces that is arranged to physically contact the charge providing elements 72 of the charge station. The charge contact pads or surfaces of the charge head may be sprung based so as to lessen the impact of the charge contacts making with the contact pads of the charge receiving elements 70 of the load handling device. The charge receiving element 70 can be arranged on at least one wall of the load handling device. Further detail of the arrangement of the charge receiving element 70 on the vehicle body of the load handling device is discussed further below. Whilst the charge providing element 72 and the charge receiving element 70 are described to physically contact each other to transfer power between their respective contact surfaces, for the purpose of the present invention, the terms charge providing element 72 and the charge receiving element 70 can also be construed to cover a contactless arrangement through wireless charging. The least one charge providing element and the at least one charge receiving element provide a power coupling through either contact or through not-contact means.

In the particular embodiment shown in Figure 7, the first part 64 of the charging system 60 comprises the at least one charge receiving element 70 that is adapted to electrically couple with a DC power source. The at least one charge receiving element 70 comprises two charge receiving pads, i.e. one of the charge-receiving pads is DC- and the other is DC+ that mates with corresponding two charge providing pads. The second part 66 of the charging system comprises a DC/DC converter 74 downstream of the energy storage means 62. The DC/DC converter 74 regulates the voltage from the energy storage means 62 to the operational voltage of the electrical load 68. Power from the energy storage means 62 is consumed by an electrical load 68 which includes but are not limited to the power consumed in the operation of the load handling device on the grid framework structure. These include but are not limited to power consumed by at least one motor for driving the lifting assembly and/or the driving assembly and/or the directional change mechanism of the load handling device as well as the power needed to provide communication between a communication port of the load handling device and a central control system. In an example of the present invention, the at least one motor is a DC motor. For the purpose of the present invention, the electrical load 68 represents the power consumed by the load handling device during operation on the grid framework. Depending on an input voltage across the DC/DC converter 74 and the operational voltage of the electrical load 68, the DC/DC converter 74 can step down and/or up the DC input voltage from the energy storage device 62 to a suitable voltage across the electrical load 68. For example, the DC/DC converter 74 can be buck converter as commonly known in the art to step down the DC/DC voltage or a boost convertor to step up the DC voltage or a combination thereof, e.g. buck-boost converter. As is commonly known in the art, the DC/DC convertor 74 comprises a power stage and a control circuit. The power stage include one switching cell 76 (e.g. a transistor and a diode) and an output filter (e.g. an inductor and a capacitor). The output voltage of the DC/DC converter 74 is adjusted by adjusting the duty cycle of the switching cell. In comparison to batteries which maintains a predetermined voltage during discharge, the bank or assembly of supercapacitor modules follows a linear discharge pattern which means the output voltage from the bank of supercapacitor modules would fall and reach below the operational voltage of the electrical load. The DC/DC converter 74 regulates the output voltage from the bank of the supercapacitor modules so as to maintain a steady voltage across the electrical load 68. For the purpose of the present invention, the term "regulate" in relation to a DC/DC converter covers both the operation of stepping down the DC voltage or stepping up the DC voltage or a combination of both.

In order to achieve the throughput of items from the storage system to the pick stations and therefore meet demand, it is essential that the load handling devices operate at a maximum possible acceleration on the grid. The greater the acceleration of the load handling devices operable on the grid, the quicker the load handling devices can reach a desired grid cell when retrieving or storing a storage container from a given storage column. Conversely, the lower the acceleration of the load handling device operating on the grid, the longer it will take the load handling device to reach a desired grid cell and thus, the more time consuming for the load handling device to retrieve a storage container from a given storage column. As a result, to maintain the throughput of items from the storage system and thus meet demand with a lower acceleration, an increased number of load handling devices would need to be operational on the grid.

The storage system comprises a control system that manages the movements of the load handling devices on the grid. The control system keeps track of the positions of each of the load handling devices, instructs the load handling devices to move to new locations, and avoids collisions. If a load handling device is not able to achieve the required acceleration, it may not be able to fulfil the required movement in the predicted time. Other load handling devices may need to slow down or be re-routed in order to avoid a collision. As well as making the control much more complicated, this can slow down or interfere with the routes of other load handling devices on the grid, not just the load handling device with insufficient acceleration.

If the rechargeable energy storage means is a battery, the battery voltage may decrease with time as the battery is discharged during use. When the battery voltage drops below a threshold level, the battery's reduced output voltage means that it may not be able to provide sufficient voltage to the motors, so the motors may not be able to provide sufficient torque for the load handling device to reach the required acceleration. As described above, the DC/DC converter 74 regulates the output voltage from the rechargeable energy storage means so as to maintain a steady voltage across the electrical load 68. This is even more important when the battery is partially discharged and the voltage to the motors would otherwise drop.

The acceleration of the load handling device on the grid is dependent on the torque response of the driving mechanism (for example, one or more motors driving the wheels). Generally the rechargeable energy storage means is rated to supply enough current to provide the required torque to drive the load handling device at the desired acceleration. However, one issue with rating the rechargeable energy storage means to meet the torque demand at the wheels is that the power rating of the rechargeable energy storage means may be too large for the other auxiliary components of the load handling device. Auxiliary components may include circuit boards, sensors, actuators, and other components.

A first option to mitigate this problem would be to step down the voltage from the rechargeable energy storage means to the required voltage across the auxiliary components, and to drive the driving mechanism (e.g. wheel motors) directly from the voltage across the rechargeable energy storage means. A second option, or in combination with the first option, would be to step up the voltage across the driving mechanism (e.g. wheel motors) to deliver the required torque. In both options, a DC/DC converter can be used to step down or step up the voltage from the rechargeable energy storage means. For example, a buck converter can be used to step down the voltage from the rechargeable energy storage means and a boost converter can be used to step up the voltage across the driving mechanism (e.g. wheel motors). Alternatively, a buck/boost converter be used to provide both buck and boost conversion depending on the required power consumption.

The use of a boost DC/DC converter to step up the voltage across the driving mechanism (e.g. wheel motors) has the effect of driving the rechargeable energy storage means harder, as the boost converter will draw more current from the rechargeable energy storage means, particularly during the acceleration phase of the load handling device on the grid. In the case where the rechargeable energy storage means is a battery, e.g. electrolytic type battery, this has the effect of reducing the lifespan of the battery because cells of the battery are driven harder causing heat generation. One or more supercapacitor modules as the rechargeable energy storage means are more robust, in the sense that they are better able to handle sudden spikes in power consumption, particularly during acceleration of the load handling device on the grid. One or more DC/DC converters across the one or more supercapacitor modules can be used to regulate the voltage across the auxiliary components and across the driving mechanism (e.g. wheel motors) without overloading the auxiliary components, since the electrical load across the auxiliary components is generally much less than across the driving mechanism (e.g. wheel motors), particularly during acceleration of the load handling device on the grid. The use of one or more DC/DC converters also removes the need to provide separate power sources that are rated to cater for the different electrical loads in the load handling device.

Figure 7b is a schematic view showing the main electrical components of the charging system of the load handling device, incorporating an auxiliary DC/DC converter 75 for auxiliary components 77, according to another embodiment of the present invention. As described above, the DC/DC converter 74 can be used to step up the voltage from the energy storage means 62 to the driving mechanism (e.g. wheel motors), which is part of the electrical load 68. The auxiliary DC/DC converter 75 can be used to step down the voltage from the rechargeable energy storage means 62 to the auxiliary components 77.

One or more branches can be provided from the bank of supercapacitor modules, each branch comprising a DC/DC converter to regulate the voltage to a predetermined amount across each branch. For example, one or more branches can supply power to the auxiliary components and one or more branches supply power to the motors driving the wheels, the voltage across each of the one or more branches being regulated to a predetermined voltage by a DC/DC converter. For example, in the embodiment illustrated in Figure 7b there is one branch supplying power to the auxiliary components 77 using the auxiliary DC/DC converter 77, and another branch supplying power to the electrical load 68 through the DC/DC converter 74.

It will be appreciated that the embodiment of Figure 7b is an illustrative example only, and there may be multiple auxiliary DC/DC converters provided for different auxiliary components with different voltage ratings, and/or there may be multiple DC/DC converters provided for different components of the electrical load with different voltage ratings. For example, the driving mechanism (e.g. wheel motors) may have a different voltage rating to the lifting mechanism and therefore be served by different DC/DC converters.

In the case where the rechargeable energy storage means is a rechargeable battery, the DC/DC convertor can be used to extend the optional time during which the rechargeable battery is able to supply an operational voltage across the electrical load. For example, the 'size' of the rechargeable battery is dependent on the amount of charge that can be stored in the rechargeable battery. The electrochemical battery has the advantage over other energy storage devices in that the energy stays high during most of the charge and then drops rapidly as the charge depletes. However, the rapid drop in the voltage below the operational voltage of the electrical load would mean that the rechargeable battery would not be useful when the voltage across the rechargeable battery is below the operational voltage of the electrical load. By increasing the size of the rechargeable battery in the sense of providing a higher voltage rechargeable battery (greater than the operational voltage of the electrical load) and in combination with a DC/DC convertor (buck converter) to step down the voltage from the rechargeable battery, the operational time of the rechargeable battery can be increased. For example, a 64 volt rechargeable battery can be used instead of a 48 volt rechargeable battery and the DC/DC convertor steps down the voltage across the 64 volt rechargeable battery to the operational voltage of 48 volts. This will extend the time the rechargeable battery supplying the required operational voltage for the electrical load as there is more charge stored in the higher voltage rechargeable battery.

Equally, the DC/DC convertor can step up the voltage across the rechargeable battery, i.e. boost convertor. However, the problem with stepping up the voltage from the rechargeable battery is that the battery cells are put under stress as more current is drawn from the battery cells to compensate for the drop in voltage in order to achieve the operational power of the electrical load. The use of a DC/DC convertor to step up the voltage from the rechargeable battery may be applicable for a relatively short time to extract more useful charge from the rechargeable battery.

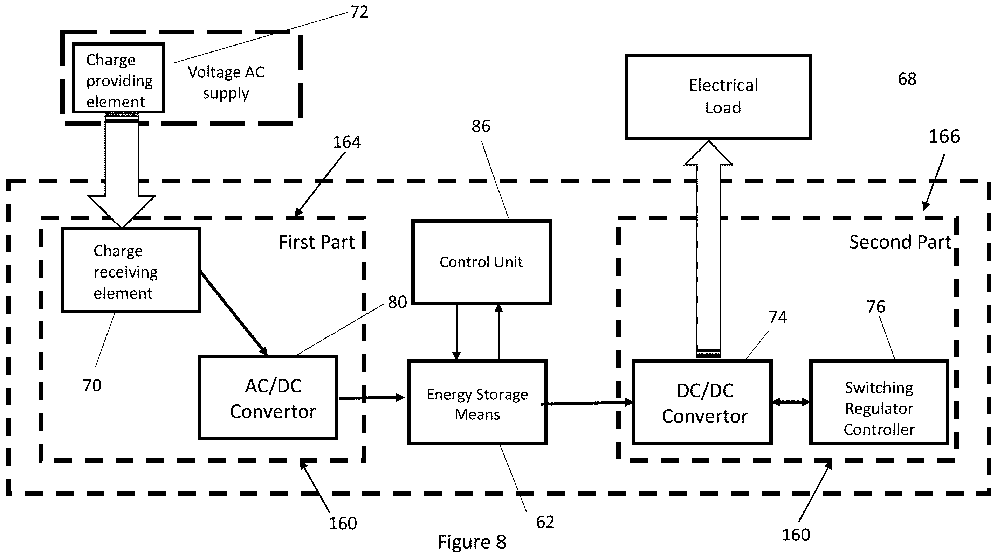

In another exemplary embodiment of the present invention, the charging system 160 is configured to receive power from an AC power source and convert the AC voltage to a DC voltage for charging the energy storage means or storage device (see Figure 8). The charging system 160 can be divided into a first part 164 that is arranged to receive a charge from a charge head of a charge station delivering an AC voltage and converting the AC voltage to a DC voltage and a second part 166 for delivering the DC charge from the energy storage means or storage device 62 to the electrical load 68. The first part 164 of the charging system 160 comprises the at least one charge receiving element 70 that is arranged to receive a charge from the AC power source via at least one charge providing element 72. The second part 166 of the charging system 160 behaves similarly to the charging system 60 described above with respect to Figure 7, whereby the second part comprises a DC/DC converter 74 downstream of the energy storage means to regulate the voltage from the energy storage means to the operational voltage across the electrical load
Whilst not shown in Figure 8, in a particular embodiment of the present invention, the charge head can be connected to a three phase AC voltage supply and therefore, the at least one charge providing element comprises three contact pads or contact surfaces that this arranged to physically contact three contact surfaces or contact pads of the at least one charge receiving element of the load handling device. In comparison to AC single phase voltage supply, the use of three phase power supply offers the advantage of the ability to transmit three times as much power using just 1.5 times as many wires (i.e., three instead of two). In the UK, for example, where a single phase AC supply is 230 - 240 volts through two wires (live and neutral), three phase supply is 415 volts through three wires. To conserve contact area of the least one charge receiving element on the vehicle body of the load handling device, the three electrical charge receiving contact surfaces can comprise three annular rings concentrically arranged for electrically coupling with corresponding concentrically arranged three annular rings of the three electrical charge providing contact surfaces. The AC voltage received across the contact pads of the at least one charge receiving element is subsequently converted to a DC voltage by an AC/DC convertor or rectifier 80 suitable to provide a DC voltage to charge the rechargeable energy storage means 62. Examples of a commercially available three phase AC/DC converter for a three phase 48V AC charging application up to a circa 160A include a 3-phase bridge rectifier module from Vishay VS-160MT140KPBF which has a peak average forward current of 200 amps. The charge station can comprise a transformer to step down the AC voltage supply to a suitable AC voltage prior to being applied across the at least one charge receiving element of the load handling device. For example, the AC voltage at the charge station can be stepped down by one or more transformers to deliver a charge of 160 amps at 48 volts suitable to be supplied across the three phase AC/DC convertor.

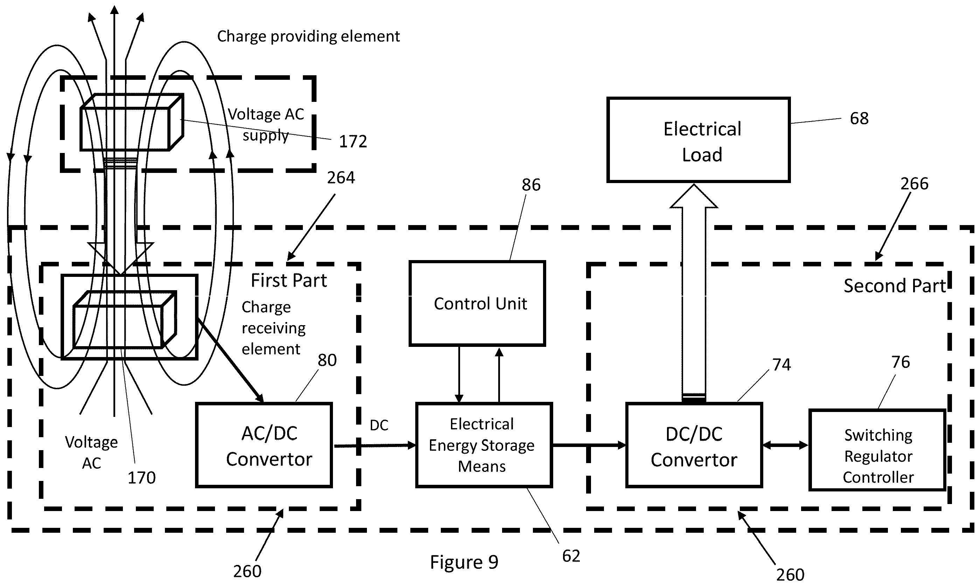

Whilst the embodiment above describes a physical contact between the contact pads of the least one charge providing element 72 at the charge station and the at least one charge receiving element 70 of the load handling device in order to transfer power from the charge station to the rechargeable energy storage means 62 in the load handling device, in another exemplary embodiment of the present invention, the at least one electrical charge receiving element comprises a wireless charging receiver coil for inductively coupling with a wireless charging transmitter coil. As is commonly known in the art, power can be wirelessly conveyed from one place to another using the Faraday Effect, where a changing magnetic field causes an electrical current to flow in an electrically isolated secondary circuit. A charging system 260 incorporating one form of wireless power transfer is shown in Figure 9. The wireless power transfer comprises two coils in close proximity but separate by a gap (typically an air gap). One coil 172 (transmitter coil) of the wireless power transfer acts as the at least one charge providing element and the other coil 170 (receiver coil) acts the at least one charge receiver element. A time varying current is caused to flow in the at least one charge providing element 172 by a suitable electronic circuitry (not shown). The AC current flowing in the at least one charge providing element 172 produces a time varying magnetic field (shown as flux lines in Figure 9). The time varying magnetic field induces current in the charge receiving element 170, which is used to charge the rechargeable energy storage means 62 electrically coupled to the at least one charge receiving element 170 via the AC/DC converter 80. The advantage of wireless power transfer over physically contacting the charge pads is that the at least one charge providing element 172 and the at least one charge receiving element 170 can be covered in a protective layer, e.g. waterproof coating and is safe if either the wireless charge providing element or the wireless charge receiving element is inadvertently is touched. Other advantages include the ability to transfer a high voltage supply across the wireless charge receiving element. The efficiency of the power transfer is dependent on the separation of the coils between the wireless charge providing element (the at least one charge providing element) and the wireless charge receiving element (the at least one charge receiving element). For the purpose of the present invention, the at least one charge providing element and the at least one charge receiving element respectively covers the wireless charge providing element and the wireless charge receiving element. Various commercially available inductive charging system in the marketplace include but are not limited to an Inductive Charging System supplied by In²Power^{®} which can effectively transfer power between the coils over an air gap in the range 5mm to 48 mm.

Unlike transferring power through a physical contact between the at least one charge providing element and the at least one charge receiving element, wireless charging offers the advantage that power at a high voltage in region of 400v or more can be transferred to the wireless charge receiving coil. The electrical components downstream of the wireless charge receiving element behaves in a similar way as the electrical components described above with respect to Figure 8 whereby the AC voltage is subsequently converted to a DC voltage by an AC/DC converter 80 for charging the energy storage means 62 and a DC/DC converter 74 regulates (i.e. steps up or down the DC voltage) the output voltage from the energy storage means 62 to the operational voltage across the electrical load. Typically, the operational voltage for charging a battery of a load handling device is in the region of 48v.

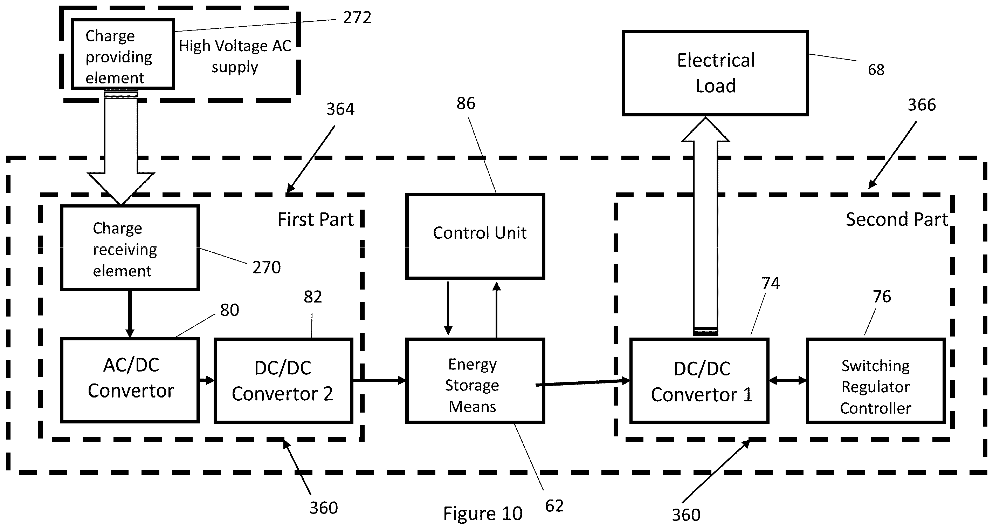

An optional second or secondary DC/DC converter 82 (see Figure 10) can step down or up the DC voltage (output voltage) from the AC/DC converter 80 to a suitable voltage across the rechargeable energy storage device 62. The second DC/DC converter 82 prevents applying a too high voltage across the rechargeable energy storage means 62 and thereby, over charging the rechargeable energy storage means. Equally, the second DC/DC converter 82 can be configured to step up the DC voltage from the AC/DC converter 80 necessary to apply sufficient charge voltage across the rechargeable energy storage means 62, and thereby, adequately charge the rechargeable energy storage means 62 to a suitable voltage.

In a particular embodiment of the present invention shown in Figure 10, the charging system 360 comprises a DC/DC converter 82 positioned between the AC/DC converter 80 and the energy storage means 62, e.g. an assembly or bank of one or more supercapacitors, and a DC/DC converter 74 positioned between the energy storage means, e.g. the assembly of one or more supercapacitor modules 62, and the electrical load 68. For the purpose of explanation of the present invention and to keep consistency with the terminology used in the present invention, the DC/DC converter 74 between the energy storage device and the electrical load is defined as a first DC/DC converter 74 and the DC/DC converter positioned between the AC/DC converter 80 and the energy storage means 82 is defined as a second DC/DC converter 82.

The second DC/DC convertor 82 can be configured to step down or step up the DC voltage from the AC/DC convertor 80 to a predetermined voltage to be applied across the bank of supercapacitor modules 62. The predetermined voltage is dependent on the maximum charge voltage of the bank of supercapacitor modules 62 so that an excessive charge voltage is not applied across the bank of supercapacitor modules as this would potentially cause damage to the bank of supercapacitor modules. For example, the second DC/DC converter 82 draws direct current from the AC/DC converter 80 at a first voltage and converts the first voltage to a second voltage suitable to be applied across the bank of supercapacitor modules 62, i.e. maximum rated charge voltage of the bank of supercapacitor modules, e.g. 48 volts. In the particular embodiment of the present invention, the second DC/DC converter 82 is a buck converter and the first DC/DC converter 74 is a boost converter. Optionally and depending on the output voltage across the AC/DC converter 80, the second DC/DC converter 82 can either step up or step down the voltage from the AC/DC converter 80 and the first DC/DC 74 can either step up or step down the voltage from the bank of supercapacitor modules 62, i.e. the first DC/DC 74 and/or the second DC/DC converter 82 can be a buck-boost converter.

The second DC/DC converter 82 positioned between the AC/DC convertor 80 and the bank of supercapacitor modules 62 is optional and is dependent on whether the AC/DC converter 80 is able to deliver a steady voltage at the maximum voltage across the energy storage means. Whilst it is optional to remove the second DC/DC converter 82 to regulate the output voltage from the AC/DC convertor 80, to prevent overcharging or undercharging of the rechargeable energy storage means 62, the second DC/DC provides an additional safety device to prevent overcharging of the rechargeable storage device 62 and thereby, increase the life of the rechargeable energy storage means 62. However, due to the linear discharge voltage pattern of supercapacitors, a DC/DC converter (the first DC/DC converter 74) positioned between the bank of supercapacitor modules 62 and the electrical load 68 is necessary such that current drawn from the supercapacitor modules 62 is delivered to the electrical load 68 at the operational voltage of the electrical load, e.g. 48 volts.

Whilst the particular embodiment shown in Figure 10 describes the charge receiving element 270 being adapted to receive an AC charge and the AC power supply is subsequently converted to a DC by an AC/DC converter 80 within the load handling device, the present invention is equally applicable where the at least charge receiving element directly receives a DC charge from a DC power supply such that the second DC/DC converter 82 is configured to regulate the DC voltage from the at least one charge receiving element to across the energy storage means.

In all of the embodiments described with reference to Figures 7 to 15, energy stored in the energy storage means is controlled by a control unit 86. The control unit 86 is instructed to execute instructions pertaining to the operation of the load handling device on the grid structure, docking at a charge station, monitoring the energy stored in the energy storage device. The control unit 86 receives instructions via a communication device (not shown) from a central control system that is configured to control the navigation/routing of the load handling devices on the grid, including but not limited to moving from one location to another, collision avoidance, optimisation of movement paths, control of activities to be performed, etc.

Whilst batteries have a relatively high specific energy in comparison to supercapacitors, in that they can hold a charge for a longer period of time, they have drawbacks such as environmental hazard, easily damaged through overcharging, have a relatively short lifespan with much fewer number of charging and discharging cycles and much longer charge times and therefore, increasing the idle time of a load handling device operational on the grid framework structure.

### Supercapacitors or Ultracapacitors

The present invention concerns an improved charging system comprising a power system for powering the electrical load of the load handling device wherein the improved power system comprises an assembly or bank of supercapacitor modules. In respect to Figures 7 to 15 described above, the energy storage means comprises a bank or an assembly of one or more supercapacitor modules.

Supercapacitors mainly include double layer supercapacitors and/or tantalum supercapacitors. The most widely used supercapacitors applicable in the present invention are mainly electric double layer supercapacitors and can be used to store extremely large amounts of electrical charge. Instead of using a conventional dielectric as found in conventional capacitors, supercapacitors use two mechanisms to store electrical energy: double layer capacitance and pseudocapacitance. Double layer capacitance is electrostatic in origin, while pseudocapacitance is electrochemical, which means that supercapacitors combine the workings of normal capacitors with the workings of an ordinary battery.

Supercapacitors have charge and discharge times comparable to those ordinary capacitors e.g. seconds or minutes. Such a charge process is much quicker than batteries. For example, where batteries can take up to several hours to reach a fully charged state, supercapacitors can be brought to the same charge state in less than a couple of minutes. In comparison to batteries, the specific power of supercapacitors, which is a measure of the maximum power output divided by the total mass of the rechargeable energy storage means, is much greater than a battery. For example, in comparison to a Li-ion battery which has a specific power of around 1-3kW/kg, the specific power of a typical supercapacitor can be as high as 10 kW/kg. Supercapacitors is also forgiving in hot and cold temperatures which is particularly important where the load handling device is operating in chilled and/or frozen environments in transporting grocery commodities - an advantage that batteries cannot meet equally well. For the purpose of the present invention, the different storage temperature include ambient control temperature, chilled temperature and frozen temperature. Frozen temperature covers a range between substantially -25°C to substantially 0°C, more preferably between substantially -21°C to substantially -18°C; the chilled temperature covers a range between substantially 0°C to substantially 4°C and the ambient controlled temperature coves a range between substantially 4°C to substantially 21°C.

However, supercapacitor come with a number drawbacks over batteries. One of the main disadvantages is their relatively low specific energy in comparison to batteries. Specific energy is a measure of the total amount of energy stored in the rechargeable energy storage means divided by its weight. While Li-ion batteries have a specific energy of 100-200Wh/kg, supercapacitors can only store typically 5 Wh/kg. Another disadvantage of supercapacitor is their linear discharge voltage profile. In comparison to batteries which are able to maintain a steady voltage on discharge, the voltage across a supercapacitor drops linearly on discharge. This means that the output voltage of a bank or an assembly of supercapacitor modules would fall below the minimal operating voltage of the electrical load running on the bank or an assembly of supercapacitor modules relatively quickly, and the load handling device would be inoperational before all of the charge in the bank or an assembly of supercapacitor modules has discharged completely.

The present invention provides a charging system 60, 160, 260, 360, 460, 560, 660 for powering a load handling device that capitalises on the advantages of supercapacitors whilst overcoming the drawbacks of the supercapacitors. Like the charging system discussed above, the charging system 60, 160, 260, 360, 460, 560, 660 comprises a first part 64, 164, 264, 364, 464, 564, 664 for receiving power from a power supply and a second part 66, 166, 266, 366, 466, 566, 666 for delivering power to an electrical load 68. The power supply could be a DC power supply or an AC power supply. Where the power supply is an AC supply, the first part of the charging system comprises an AC/DC converter 80 as discussed above with reference to Figures 8, 9 and 10.

As the voltage across the supercapacitor drops linearly on discharge, the DC/DC converter 74 positioned between the supercapacitor 62 and the electrical load 68 is configured to maintain a steady predetermined operational voltage across the electrical load 68. For example, the motors of the load handling device operate at a voltage of 48v. In this example, the DC/DC converter 74 is configured to extract current from the supercapacitor modules 62 and delivers power to the electrical load at 48v. As the voltage drops during discharge of the supercapacitor modules 62, the DC/DC converter 74 is configured to step up the DC voltage from the supercapacitors 62 so as to maintain a predetermined operational voltage across the electrical load 68. Depending on the output voltage across the bank of supercapacitor modules 62, the DC/DC convertor 74 could step up the voltage from the bank of supercapacitor modules 62, i.e. a boost converter, and/or step down the voltage from the bank of supercapacitor modules 62, i.e. buck converter or a combination of both, i.e. buck-boost. Due to the linear discharge voltage pattern of the supercapacitors, the DC/DC converter 74 positioned between the bank of supercapacitor modules 62 and the electrical load 68 is necessary such that current drawn from the supercapacitor modules 62 is delivered to the electrical load 68 at the operational voltage of the electrical load, e.g. 48 volts.

However, whilst DC/DC convertors are ideal to step down or step up an input DC voltage, DC/DC convertors do present losses in a charging circuit. The losses is dependent on the degree to which the input voltage needs to be stepped up or stepped down. For a given output voltage the efficiency of a DC/DC convertor is dependent on the input voltage across the DC/DC converter reaching above a threshold voltage below which the DC/DC becomes less efficient to step up or step down the DC voltage. The linear discharge voltage of supercapacitors presents a challenge to ensure that a residual voltage of the bank of supercapacitor modules is above the threshold voltage of the DC/DC convertor 74 sufficient to efficiently step up or step down the input voltage from the bank of supercapacitor modules to the operational voltage across the electrical load. The residual voltage being the voltage remaining across the bank of supercapacitor modules during discharge.

The present invention is best explained by first considering the theoretical aspects of capacitors, in particular supercapacitors. The amount of energy that can be potentially delivered to the electrical load is dependent on the amount charge stored on the capacitor. According to equation 1 above, the total charge on a supercapacitor is dependent on the total capacitance of the supercapacitor and the voltage across the supercapacitor. The greater the capacitance of the supercapacitor, the greater the charge that can be stored on the supercapacitor. Equally, the greater the voltage across the supercapacitor, the greater the charge that can be stored on the supercapacitor. In terms of energy, the energy stored on the supercapacitor is given by the equation, $E = \frac{1}{2} {CV}^{2}$ (3)

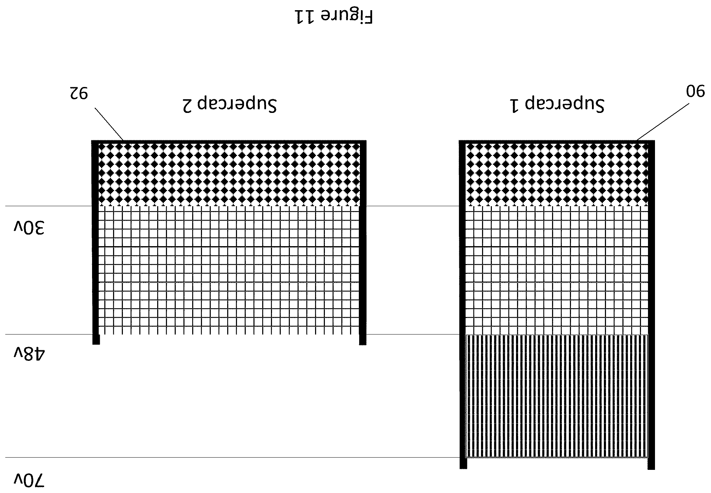

The energy stored on a supercapacitor can be expressed by the schematic diagram shown in Figure 11. Here two supercapacitors 90, 92 are shown each storing the same amount of energy according to equation 3. Let's assume that the first supercapacitor 90 on the left hand side has a hypothetical maximum voltage of 70v across the supercapacitor and the second supercapacitor 92 on the right hand side has a hypothetical maximum voltage of 48v across the supercapacitor. Let's assume the supercapacitors as two buckets, voltage is the height of the bucket, while capacity (i.e. capacitance) is its width. Due to the physical limitations of a DC/DC converter 74, which has a minimum extraction voltage (in this example, 30 V), a higher voltage, lower capacity supercapacitor allows to extract more energy, since it has more voltage margin to the 30 V mark. Thus, the discharge time, which is a measure of the time the voltage across a supercapacitor reaching a threshold voltage, is greater for a lower capacitance supercapacitor than a higher capacitance supercapacitor as more residual charge is left on the lower capacitance supercapacitor. The threshold voltage can be equivalent to the operating cycle of the electrical load below which the load handling device is in-operational since the DC/DC converter 74 is unable to step up the voltage to the operational voltage. Expressed as a percentage of the maximum charge voltage of the supercapacitor, the threshold voltage can represent X% of the maximum charge voltage of the bank of supercapacitor modules where X is 10% to 50%, preferably, 20% to 50%, more preferably 30% to 50%.

The total capacitance and thus, the maximum voltage of a bank or assembly of one or more supercapacitor modules can be controlled by connecting one or more supercapacitor modules in series and/or parallel. The total capacitance of supercapacitor modules connected in series is given by the equation:- $\frac{1}{C 1} + \frac{1}{C 2} + \frac{1}{C 3} + ⋯ etc = \frac{1}{CT}$ (4)

Similarly, the total capacitance of supercapacitor modules connected in parallel is given by the equation:-$C 1 + C 2 + C 3 … etc = CT$ (5)

By controlling the number of supercapacitors connected in parallel and in series, the total capacitance and thus, the maximum voltage of a bank of supercapacitors can be tailored such that the residual voltage across the bank of supercapacitor modules is above the threshold voltage of the DC/DC converter and thereby, increasing the discharge time from when the residual voltage across the bank of supercapacitor modules falls below the threshold voltage of the DC/DC converter.

When the residual voltage across the bank of supercapacitor modules falls below the threshold voltage necessary for the DC/DC converter 74 to efficiently apply an operational voltage across the electrical load 68, the load handling device is instructed to recharge the bank of supercapacitor module. A control unit 86 in the load handling device monitors the voltage across the bank of supercapacitor modules and instructs the load handling device to visit a charge station when the voltage falls below or at a predetermined voltage, i.e. threshold voltage. Equally, the control unit 86 sends a signal to a central control system containing information about the status of the bank of supercapacitor modules which then sends instructions to the load handling device via the control unit 86 to visit a charge station when the voltage across the supercapacitor modules reaches a predetermined voltage equivalent to the threshold voltage. The control system can comprise one or more servers, each containing one or more processors configured to perform one or more sets of instructions stored upon one or more non-transitory computer readable media.

As the charge time of supercapacitors is relatively short in comparison to batteries, recharging the bank of supercapacitor modules can represent a small proportion of the overall time the load handling device is operational doing useful work on the grid framework structure. For example, an operation on the grid framework structure can involve the load handling device being instructed to transport a container or tote along a pathway from a first grid cell to a second grid cell. The load handling device may be able to communicate with the control system through a set of frequency channels established through a set of base stations and base station controllers. Communication between the load handling device and the control system is further discussed in WO2015/185628 (Ocado Innovation Limited). The operation includes picking the container from the first grid cell and lowering the container down the second grid cell. As discussed above, locations in the grid framework structure may be indicated in two dimensions to represent the load handling device or a container's position and a container depth (e.g. container depth (e.g. container at (X, Y), depth Z).

In an aspect of the present invention, a combination of one or more supercapacitor modules connected in series and/or parallel can be tailored so that the load handling device visits fewer charge stations to recharge the bank of supercapacitor modules in an operation on the grid framework structure. Taking the example above, a pathway can include moving the load handling device from a first position or location to a second position; the first position or location being a first grid cell and the second position or location being a second grid cell on the grid structure. The bank of supercapacitor modules having a predetermined amount of charge stored at a given voltage and can be determined by the maximum voltage rating of the bank of supercapacitor modules. The control unit periodically monitors the voltage across the bank of supercapacitor modules as the voltage across the supercapacitor falls in doing work on the grid framework structure. When the voltage across the bank of supercapacitor modules reaches a voltage equivalent to the threshold voltage, the load handling device is instructed to visit a charge station to recharge or reload the bank of supercapacitor modules. This voltage could be greater than or equal to the threshold voltage of the DC/DC convertor 74.

The load handling device can be instructed to visit one or more charge stations along the pathway depending on the residual voltage in the bank supercapacitor modules and whether the residual voltage falls below the threshold voltage. In determining the threshold voltage, the bank of supercapacitor modules should have sufficient energy to visit a charge station to reload or recharge the bank of supercapacitor modules. The control system accesses a map of the charge stations distributed throughout the grid stored in a storage device and determines the closest charge station to the load handling device taking into account the amount of residual voltage across the bank of supercapacitor modules.

An operative time is a measure of the time the load handling device is operational on the grid framework structure. A discharge time of the bank of supercapacitor modules is a measure of the time the residual voltage across the bank of supercapacitor modules reaches a predetermined charge voltage (i.e. threshold voltage). Both the operative time and the discharge time are dependent on the maximum voltage across the bank of supercapacitor modules. A higher maximum voltage across the bank of supercapacitor modules would increase the discharge time and thus, yields a higher operative time. As discussed above, the maximum voltage of a bank of supercapacitor modules can be tailored by connecting one or more supercapacitor modules in series. As each supercapacitor module has a given weight, connecting multiple supercapacitor modules together increases the weight of the bank of the supercapacitor modules. In comparison to a battery such as a Li-ion battery which has a specific energy much more than supercapacitors of the order of 100-200 Wh/kg, a balance is struck between the energy stored in the bank of supercapacitor modules to the number of supercapacitor modules and thus, weight of the bank of supercapacitor modules. Increasing the maximum voltage by connecting multiple supercapacitor modules together not only increases the operative time of the load handling device on the grid framework structure but also increases the weight of the bank of supercapacitor modules and thus, the electrical load as more work needs to be done by the at least one motor to propel the increased weight along on the grid framework structure.

The number of visits that the load handling device would need to visit a charge station to recharge the bank of supercapacitor modules is dependent on the operative time which in turn is dependent on the voltage across the bank of supercapacitor modules being able to deliver the operational voltage of the electrical load which in turn is dependent on the threshold voltage of the DC/DC converter (first DC/DC converter 74 in respect to Figure 10). This is dependent on the amount of energy stored on the bank of supercapacitor modules which according to Figure 11 above is dependent on the maximum voltage across the bank of supercapacitor modules. Whilst supercapacitors can compete with batteries in terms of delivering a predetermined voltage above the operational cycle of the electrical load, increasing the operative time of the bank of supercapacitor modules reduces the frequency by which the load handling device would need to visit a charge station to reload or recharge the bank of supercapacitor modules. Examples of the operative time and discharge time for different commercially available supercapacitor modules is discussed in the examples below.

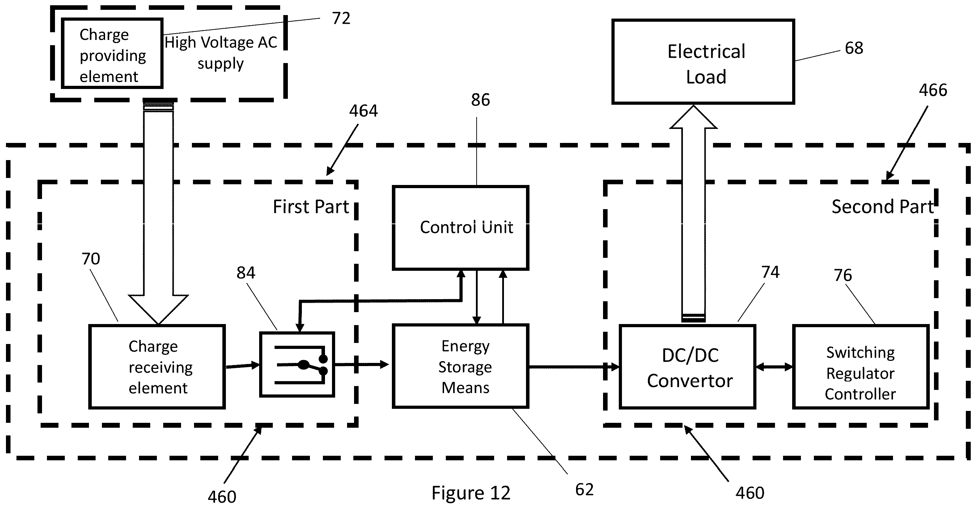

To provide additional safety, the charging system 460 of the present invention can also comprise an isolating switch 84 positioned between the at least one electrical charge receiving element 70 and the rechargeable energy storage means 62 that isolates the rechargeable energy storage means 62 when the voltage across the rechargeable energy storage means 62 reaches a predetermined voltage equivalent to the maximum charge voltage of the rechargeable energy storage device 62 to prevent damage to the rechargeable energy storage means (see Figure 12). More specifically, the control unit 86 is operative to actuate the isolating switch 84 to isolate the at least one electrical charge receiving element 70 from the electrical energy storage means 62 when the voltage across the rechargeable energy storage means 62 reaches a predetermined voltage equivalent to the maximum charge voltage of the rechargeable energy storage means 62. This is particularly important where the rechargeable energy storage means 62 is a bank of one or more supercapacitor modules. The high specific power of supercapacitors of around 10kW/kg would mean that supercapacitors would deliver a high amount of power over a very short time should the contacts of the supercapacitors are inadvertently touched. By isolating the bank of supercapacitor modules help to mitigate any accidental shorting of the supercapacitor modules through touching of the at least one charge receiving elements 70. Whilst Figure 12 shows the first part 464 of the charging system 460 comprising the at least one charging receiving element 70 and the isolating switch 84, the first part 464 can additionally comprises an AC/DC converter 80 and/or a second DC/DC converter 82 as discussed above with respect to Figures 8, 9, and 10. In all cases, the isolating switcpositioned so as to enable to isolate the first part of the charging system from energy storage means, e.g. the isolating switch is positioned adjacent the energy storage means.

### Regenerative System

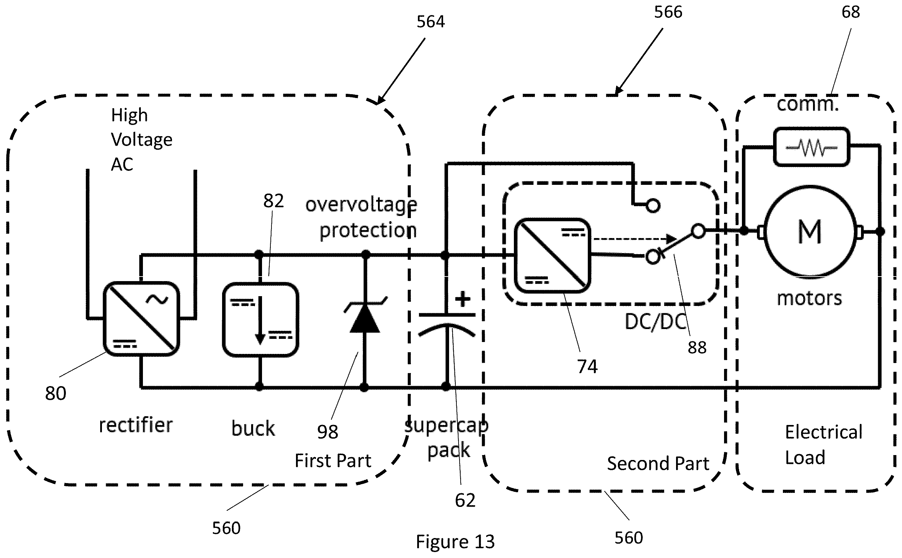

The charging system, in particular the second part of the present invention can optionally comprise a regenerative system. In the particular embodiment of the present invention shown in Figure 13, the second part 564 of the charging system 560 comprises a regenerative system whereby kinetic energy generated during deceleration or braking of the load handling device on the grid is harvested into the rechargeable energy storage means 62.

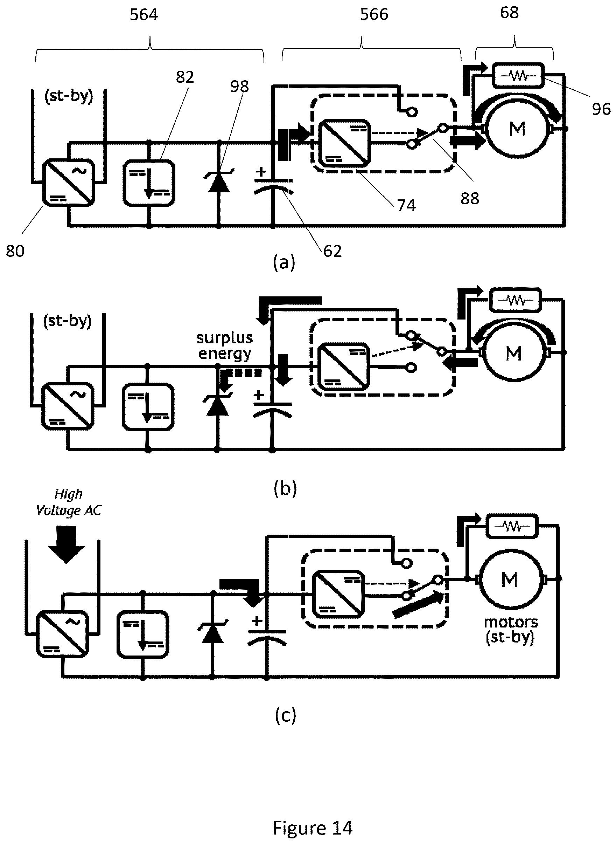

In the embodiment of the present invention, energy regenerated by the electrical load 68 can bypass 88 the first DC/DC converter 74 and flow to the main rechargeable energy storage means 62. In the particular embodiment shown in Figures 14(a), 14(b), and 14(c), the second part 566 of the charging system 560 comprises a bypass switch 88 and the rechargeable energy storage means 62 is a bank of one or more supercapacitor modules. The bypass switch 88 has a first position as shown in Figure 14(a) to allow electrical energy to flow from the bank of supercapacitor modules 62 through the first DC/DC converter 74 to the electrical load 68 and a second position to bypass the first DC/DC converter 74 such that electrical energy regenerated from the at least one motor flows to the bank of supercapacitor modules 62 as shown in Figure 14(b). For example, in practice during acceleration of the load handling device on the grid framework structure the bypass switch 88 is at the first position as shown in Figure 14(a) such that power flows through the first DC/DC converter 74 where it is either stepped up or down and is delivered across the at least one motor 68. During deceleration of the load handling device on the grid framework structure, the bypass switch 88 is at the second position as shown in Figure 14(b) such that power harvested by the at least one motor flows to charge the bank of supercapacitor modules 62, i.e. regenerated. Also shown in Figures 14(a), 14(b), and 14(c) is a communication device 96 so as to receive and provide instructions to the central control system (not shown) discussed above. The communication device 96 is continuously powered so as to enable the control unit of the load handling device to communicate with the central control system regarding the status of charge and the position of the load handling device on the grid. Instructions from the central control system are communicated to the control unit of the load handling device via the communication device 96.

During the period when the load handling device is idle when charging the bank of supercapacitor modules at the charge station, the bypass switch 88 is at the first position so as to keep the communication device 96 powered. The position of the bypass switch 88 when charging is shown in Figure 14(c). The bypass switch 88 moves from the first position to the second position depending on the voltage across the electrical load exceeding a predetermined voltage. The first DC/DC convertor 74 maintains the output voltage across the electrical load to the nominal operative voltage of the load handling device. During deceleration or braking of the load handling device on the grid framework structure, energy is generated by the at least one motor in addition to the energy drawn from the bank of supercapacitor modules. This causes the output voltage exceeding the nominal operative voltage of the load handling device. When the output voltage exceeds the nominal voltage, the control unit of the load handling device switches the bypass switch to the second position so that power flows to the bank of supercapacitor module to protect the DC/DC converter 74. An optional protection circuit 98 prevents an over-voltage exceeding the maximum charge voltage being applied across the bank of supercapacitor modules.

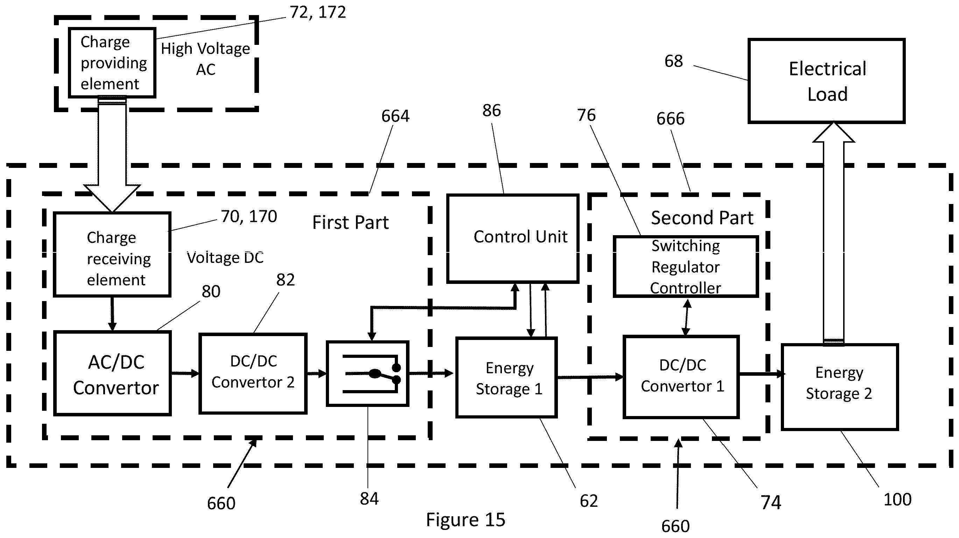

Instead of a bypass switch 88 forming part of the charging system of the present invention, the regenerative system according to another embodiment of the present invention shown in Figure 15 comprises an additional rechargeable energy storage means 100 downstream of the main rechargeable storage means 62, i.e., a first rechargeable energy storage means 62 labelled energy storage 1 and a second rechargeable energy storage means 100 labelled energy storage 2. For the purpose of the preferred embodiment of the present invention, the first and second rechargeable energy storage means 62, 100 are a bank of one or more supercapacitor modules. Energy generated from the at least one motor of the electrical load 68 during deceleration or braking of the load handling device on the grid framework structure is harvested into the second rechargeable energy storage means 100 downstream of the first rechargeable energy storage means 62. Instead of the need of a bypass switch 88 to bypass the first DC/DC converter 74 as taught in Figures 13 and 14, the second rechargeable storage means 100 provides a way for the charging system to capture the energy regenerated from the at least one motor during deceleration or braking of the load handling device.

Where the second rechargeable energy storage means 100 is a bank of one or more supercapacitors, the second rechargeable energy storage means 100 also provides an additional function of filtering out spikes that the main or first rechargeable storage energy means would experience in normal operation. The electrical loads on the rechargeable storage means is generally noisy as the electrical load spikes during a peak operation of the load handling device on the grid framework structure, e.g. acceleration and/or operating the winch of the lifting mechanism. The second rechargeable energy storage means 100 is able to absorb these sudden bursts of energy consumed by the electrical load and thereby, protects the main or first rechargeable storage means 62 from such frequent bursts of energy. For example, a rechargeable battery is more susceptible to heating and damage to the battery cells through sudden bursts of energy consumed by the electrical load, e.g. during acceleration of the load handling device on the grid framework structure and/or operation of the lifting mechanism. To mitigate damage and thus extend the life of the rechargeable battery, the assembly of one or more supercapacitor modules (second rechargeable energy storage means) downstream of the rechargeable battery helps to absorb the sudden spikes and noise in the electrical load.

Also shown in Figure 15 is an optional isolating switch 84 positioned between the second DC/DC converter 82 and the first energy storage device or means 62 so as to isolate the first energy storage means 62 when the charge in the first energy storage means 62 reaches full capacity as discussed above with respect to Figure 12.

### Hybrid System

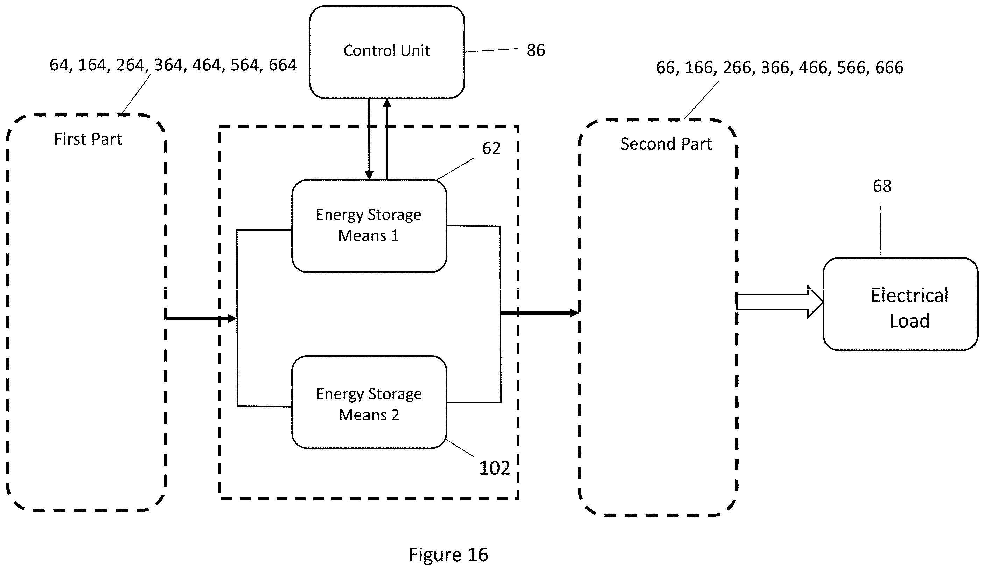

Supercapacitors are ideal when a quick charge is needed to fill a short term power need whereas batteries are chosen to provide long term energy. With a specific energy of around 120 - 240 Wh/kg for batteries in comparison to supercapacitors which has a specific energy of 5 Wh/kg, combining the two into a hybrid battery satisfies both needs and reduces battery stress, which reflects in a longer service life. In alternative embodiment of the present as shown in Figure 16, the power system for powering the electrical load 68 of the load handling device further comprises an auxiliary rechargeable energy storage means 102 such that the electrical load is shared between the rechargeable energy storage device or means 62 and the auxiliary energy storage means 102. To provide long term energy, preferably the auxiliary rechargeable energy storage means 102 is one or more batteries, e.g. Li-ion batteries and the energy storage means is a bank of supercapacitor modules. An energy management system or the control unit 86 comprising a processor controls the uptake of energy of the electrical load and shares the electrical load between the bank of supercapacitor modules (rechargeable energy storage means) 62 and the auxiliary rechargeable energy storage means 102. The control unit 86 can be the same control unit discussed above to monitor the voltage across the bank of supercapacitor modules. The first part 64, 164, 264, 364, 464, 564, 664 and the second part 66, 166, 266, 366, 466, 566, 666 of the charging system is similar to anyone of the charging systems 60, 160, 260, 360, 460, 560, 660 discussed with respect to Figures 7 to 10 and Figures 12 to 15.

The energy of the auxiliary rechargeable energy storage means 102 can be actuated to supply power to the at least one motor should the voltage across the bank of supercapacitor modules drop below a predetermined voltage equivalent to the operational voltage of the electrical load. For example, the auxiliary rechargeable energy storage means 102 can function as a reserve power source should the voltage across the main of first rechargeable energy storage means 62 fall below a predetermined level which could be equivalent to the operational voltage of the electrical load. The auxiliary rechargeable energy storage means 102 also provides sufficient energy to allow the load handling device to travel to a charge station to recharge the bank of supercapacitor modules. The control unit 86 monitors the voltage across the bank of supercapacitor modules (first or second bank of supercapacitor modules) and should the voltage across the bank of supercapacitor modules fall below a predetermined value equivalent to the operational voltage of the electrical load or below the threshold voltage of the DC/DC converter 74, the control unit 86 instructs an actuator to switch the power source to the auxiliary rechargeable storage device or means 102 to allow the load handling device to continue its operation on the grid framework structure and/or travel to a charge station to recharge the rechargeable energy storage means (bank of supercapacitor modules) 62. The energy from the rechargeable energy storage means 62 and the auxiliary rechargeable energy storage means 102 can be shared so as to provide an uninterruptable power supply to the electrical load, i.e. to the at least one motor.

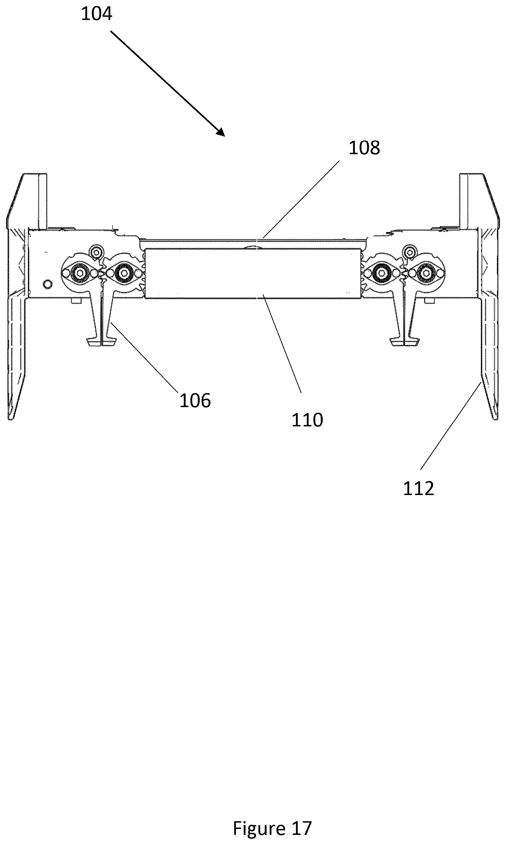

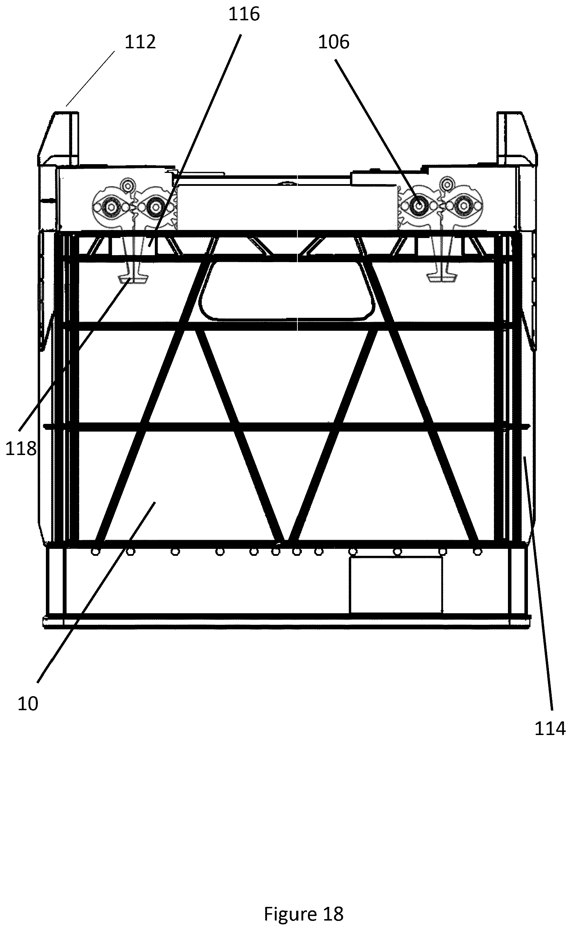

Sharing the demand on the electrical load 68 between the rechargeable energy storage means 62 and the auxiliary rechargeable energy storage means 102 can also take the form where the rechargeable energy storage means 62 and the auxiliary rechargeable energy storage means 102 separately supply power to different areas of the load handling device. One in particular is the actuation of the gripper elements 106 of the grabber device 104 to grab a container from within a grid framework structure as discussed above with reference to Figures 4 and 5. In the particular embodiment shown in Figure 17, the grabber device 104 is formed as a frame having four corner sections, a top side 108 and a bottom side 110. To grab a container 10, the grabber device 104 comprises four locating pins or guide pins 112 nearby or at each corner of the grabber device 104 which mate with corresponding cut outs or holes 114 formed at four corners of the container 10 and four gripper elements 106 arranged at the bottom side of the grabber device 104 to engage with the rim of the container (see Figure 18). The locating pins 114 help to properly align the gripper elements 106 with corresponding holes in the rim of the container. Each of the gripper elements comprises a pair of wings that are collapsible to be receivable in corresponding holes 116 in the rim of the container and an open enlarged configuration having a size greater than the holes 116 in the rim of the container in at least one dimension so as to lock onto the container (see Figure 18). The wings are driven into the open configuration by a drive gear. More specifically, the head of at least one of the wings comprises a plurality of teeth that mesh with the drive gear such that when the gripper elements 106 are actuated, rotation of the drive gear causes the pair of wings to rotate from a collapsed configuration to an open enlarged configuration (Figure 18).

When in the collapsed or closed configuration, the gripper elements 106 is sized to be receivable in corresponding holes 116 in the rim of the container as shown in Figure 18. The foot of each of the pair of wings comprises a stop 118, e.g. a boss, such that when received in a corresponding hole 116 in the rim of the container, the stop engages with an underside of the rim when in an enlarged open configuration to lock onto the container when the grabber device 104 winched upwards towards the container-receiving portion of the load handling device.

The gripper elements 106 are received in the holes in the rim of the container when the grabber device 104 is at a predetermined height above the rim of the container as measured by one or more depth sensors (not shown) mounted to the underside of the grabber device. At this depth, the gripper elements 106 are actuated to grab the container 10 in response from a signal from the one or more of the depth sensors mounted to the underside of the grabber device 104. When the grabber device is at the predetermined height above the container as measured by the depth sensor, which is an indication that the gripper elements are received within the holes in the rim of the container as shown in Figure 18, a controller sends a signal to the drive gear to actuate the gripper elements 106 to the enlarged open configuration, i.e. having a size larger than the holes in at least one dimension, in order to grab the container.

The gripper elements 106 are actuated by one or more rotary solenoids (not shown) and receives power through an extendible power cable from the grabber device 104 to the vehicle body of the load handling device, in particular the container receiving space of the load handling device. In a particular embodiment of the present invention, the power supply to the one or more rotary solenoids to actuate the gripper elements can be provided by the auxiliary rechargeable energy storage means 102 that is independent to the power provided by the energy storage means 62 powering the driving mechanism and/or lifting mechanism (winch) of the load handling device. The auxiliary energy storage means 102 is mounted to the frame of the grabber device 104 so providing a separate source of power to the grabber device, i.e. the rotary solenoids powering to the gripper elements. Similarly to the charging system of the present invention discussed above, the grabber device 104 can comprise at least one auxiliary charge receiving element (not shown) that is arranged to cooperate with at least one auxiliary charge providing element (not shown) mounted to the vehicle body, in particular the container receiving space of the vehicle body, when the grabber device is in a raised position in the container receiving space of the vehicle body. Thus, the auxiliary recharge power source is recharged when the grabber device is in a raised position in the container receiving space of the load handling device and disconnects when the grabber device is lowered to pick up a container or tote from within the grid framework structure. Since, the gripper elements are only operational for a short period of time to engage with a container, the auxiliary rechargeable energy storage means 102 can be a bank of supercapacitor modules that is able to tolerate such short burst of energy at frequent intervals. The low specific energy (~5Wh/kg) and the high specific power (~10kW/kg) makes supercapacitors an ideal candidate to supply power for such operations.

Where the charging system of the present invention is configured for delivering power to a first assembly of one or more supercapacitor modules and a second assembly of one or more supercapacitor modules as discussed in the embodiment above with respect to Figure 15 to harvest energy from the electrical load, the electrical load is preferably shared between the first assembly of one or more supercapacitor modules and the auxiliary energy storage means. This is because it is preferable that the energy regenerated from the electrical load, e.g. at least one motor, is harvested into the second assembly of one or more supercapacitor modules.

Like the charging system in the embodiments of the present invention discussed above, the at least one auxiliary charge receiving element mounted to the grabber device comprises at least two electrical charge receiving contact surfaces for electrically coupling to at least two electrical charge providing contact surfaces of the at least one auxiliary charge providing element on the vehicle body. This could be through the use of physical contact pads that are sprung based that make electrical contact when the grabber device is in a raised position in the container receiving space. Alternatively, the at least one auxiliary charge receiving element comprises a wireless charging receiver coil for inductively coupling with a wireless charging transmitter coil of the at least one auxiliary charge providing element. The grabber device can comprise an auxiliary charging system based on a similar concept as the charging system of the present invention discussed above with reference to Figures 7 to 10. For example, in addition to the auxiliary charge receiving element arranged for coupling with the auxiliary charge providing element, the auxiliary charging system comprises an auxiliary AC/DC converter and at least one auxiliary DC/DC converter to supply a suitable operational DC voltage across the rotary solenoids to operate the gripper elements.

### Charge Station

According to the present invention, the at least one charge receiving element of the charging system 60, 160, 260, 360, 460, 560, 660 is configured for receiving power from a DC or an AC power source via a charging providing element at the charge head of a charge station. As discussed above, power coupling between the charge providing element of the charge station and the at least one charge receiving element of the charging system can be through physical contact based on sprung based contact surfaces or pads or wireless charging through magnetic induction. In the case where the coupling is through electrical contact, the charge providing element comprises at least two charge providing contact pads or surfaces (e.g. live and neutral) to electrically couple with at least two corresponding charge receiving pads or surfaces of the charging system of the load handling device. Likewise, in the case where coupling is through wireless charging, the at least one charge providing element comprises a transmitter coil providing a changing magnetic field and the at least one charge receiving element comprises a receiver coil that inductively couples with the at least one charge receiving element.

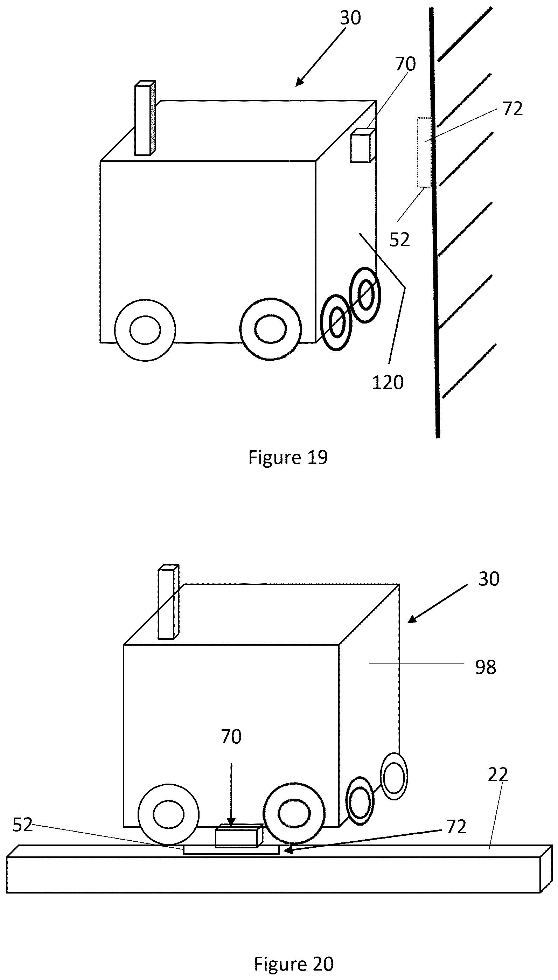

The at least one charging receiving element is mounted to at least one wall of the load handling device for coupling with the at least one charging providing element of the charge head. Figures 6, 19 and 20 show alternative arrangements of the charging head to charge the rechargeable energy storage means according to an embodiment of the present invention. For example, as shown in Figure 6 the charge receiving element is mounted to a top wall of the vehicle body of the load handling device such that the charge receiving element couples with the charge head from above as discussed earlier in the introduction. Other arrangements are shown in Figure 19, where coupling occurs through a sidewall 120 of the vehicle body of the load handling device 30. Here, the at least one charge providing element 72 is side mounted to a wall or post at an edge or on the grid framework structure and the load handling device 30 is instructed to position itself against at the wall or post so that the at least one charging receiving element 70 couples with the at least one charge providing element 72 of the charge head 52. Equally and applicable in the present invention, coupling between the at least one charge receiving element 70 and the at least one charge providing element 72 can occur through the base of the load handling device (see Figure 20). Here, the at least one charge receiving element 70 is mount to a bottom wall of the vehicle body that is arranged to couple with the charge head 52 mounted to a pathway such as a track or rail 22 on the grid framework structure. The at least one charge receiving element 70 can be duplicated on one or more walls of the vehicle body so that the rechargeable energy storage means can be charged from different faces of the load handling device.

Wireless charging of a bank of supercapacitor modules provides the advantage that the load handling device can be instructed to dock at a charge station for a relatively short period of time in comparison to batteries to recharge the bank of supercapacitor modules without excessively blocking a pathway on the grid framework structure for a long period of time. Multiple charge stations can be distributed around or on the grid to allow one or more load handling devices to rapidly recharge on the grid, e.g. during a picking operation. For example, an operation can involve the load handling device being instructed to perform a mission or operation involving picking a container from a first grid cell and transporting the container to a second grid cell where it is lowered into the second grid cell. The load handling device is instructed to travel along a pathway on the grid framework structure to carry out the mission. The control system discussed above determines the amount of charge to carry out the mission and the amount of charge in each of the load handling devices on the grid structure. A load handling device can be selected which has sufficient charge in the assembly of the one or more supercapacitor modules to carry out the mission. In the case where the rechargeable energy means device is a bank of one or more supercapacitor modules, the energy necessary to carry out the mission may exceed the energy stored in the bank of the one more supercapacitor modules. The pathway may be extended on the grid framework structure so that the load handling device visits one or more charge stations when carrying out the mission. For example, the load handling device can be instructed to make a detour or a diversion when travelling to the second grid cell to a charge station to reload the bank of supercapacitor modules before continuing on the journey to the second grid cell. Equally and within the scope of the present invention, the control system can instruct the load handling device to initially visit a charge station prior to carrying out the mission.

As the duration of time the load handling device is stationary on a grid cell when picking a container from the grid cell, e.g. 30 seconds, is sufficiently long to recharge the bank of one or more supercapacitor modules, the charge station can be at the first grid cell and/or the second grid cell. For example, the load handling device can be instructed to charge at the first grid cell and/or at the second grid cell. The first grid cell can be a pick station and the second grid cell can be decant station. The ability to inductively charge the assembly of one or more supercapacitor modules discussed above provide the ability of the load handling device to contemporaneously charge the assembly of one or more supercapacitor modules when performing an operation at the first grid cell and/or the second grid cell. The operation can include picking or depositing (lowering) a container at the first grid cell and/or the second grid cell. For example, the assembly of the one or more supercapacitor modules can be inductively charged whilst operating the winch of the lifting mechanism.

Alternatively, one or more charge stations can be distributed along the pathway so that the load handling device visits one or more charge stations when carrying out the mission when travelling along the pathway on the grid from the first grid cell to the second grid cell.

### Example 1

Calculations are performed to evaluate the feasibility of a bank of one or more supercapacitor modules as an energy storage means and how they affect to the performance of a load handling device on a grid framework structure. Comparisons were made with a load handling device powered by a bank of Li-ion batteries.

As a comparison, the load hand handling device is traditionally powered by a bank of Li-ion battery modules. The parameters of the Li-ion battery modules are shown in Table 1 below:-

**Table 1: Parameters of the Li-on battery used to power the Load Handling Device**

| **Parameter** | **Value** |
|---|---|
| Vout | 48volts |
| Iout | 160amps |
| Specific Power | 3.3kW/h |
| Weight | 30kg |
| Volume | 0.03m³ |

According to the results of Table 1, the operational voltage of the electrical load is 48 volts and delivers a current of 160amps. Constrained by the weight of 30kg of the Li-ion battery modules, Table 2 below are examples of commercially available supercapacitor modules that can be used in the charging system according to the present invention to deliver a voltage across the electrical load equivalent to the voltage generated by the Li-ion battery shown in Table 1, e.g. 48volts. It is clearly apparent in Table 2, that two or more supercapacitor modules can be connected in parallel to increase the capacitance of the bank of supercapacitor modules and fall within the weight requirements of the rechargeable energy storage means, e.g. 30kg. For example, two commercially available supercapacitor modules under the product name EDLC from Yunasko having a maximum rated voltage of 48v and a capacitance of 165 Farads can be combined in parallel to give a total capacitance of 330 Farads (see equation 5) and provide a maximum rated voltage across the supercapacitor modules of 48 volts. As each supercapacitor module weighs 13.5 kg, this will give a combined weight of 27kg below that target value of 30kg of an equivalent Li-ion battery.

**Table 2: Examples of Commercially available Supercapacitor modules**

| **Name** | **Manufacturer** | **Weight (kg)** | **Nominal Voltage (V)** | **ESR (mOhm)** | **Capacitance (F)** | **Stored Energy (Wh)** | **Specific Energy (Wh/kg)** | **Specific Power (kW/kg)** |
|---|---|---|---|---|---|---|---|---|
| EDLC Product: 48V/165F Module | Yunasko | 13.5 | 48 | 6.6 | 165 | 53 | 3.93 | 6.6 |
| 051R3C0166 F EA | Mitron | 12 | 51.3 | 5 | 166 | 60.7 | 5.06 | 5.2 |
| SkelMod 51V 177F | Skeleton | 15.8 | 51 | 4 | 177 | 63.9 | 4.4 | 10.3 |
| SkelMod 102V 88F | Skeleton | 28.8 | 102 | 7.6 | 88 | 127.16 | 4.42 | 11.9 |
| XLR-48R6167-R | Eaton | 14.7 | 48.6 | 5 | 166 | 54 | 3.67 | 8.03 |
| XLR-51R3187-R | Eaton | 14.7 | 51.3 | 5 | 188 | 68.7 | 4.67 | 8.95 |
| XLM-62R1137A-R | Eaton | 16 | 62.1 | 6.7 | 130 | 69.6 | 4.35 | 8.99 |

Table 3 shows the performance of a bank of Li-ion batteries powering the load handling device on the grid framework structure.

**Table 3: Battery performance of Li-ion battery in Load Handling Device**

| **Parameter** | **Value** | **Status** |
|---|---|---|
| Operating Cycle | 4 hours | Discharge |
| | 12 - 18 minutes | Charge |
| Power Output of Electrical load | 400W | Average |
| | 600W | Peak |
| | 96W | Idle |

Typically, the Li-ion battery requires a charge of 15 mins for every 4 hours of discharge. During operation on the grid framework structure over a four hour period, the power on the electrical load reaches a peak of 600W and 96W when idle as power is consumed through communication via the communication device 96 (see Figure 14) between the controller (control unit) in the load handling device and a central control system. The average power consumed by the electrical load is taken to be 400W over a 4 hour period, i.e. 100Wh. To provide an equivalent power, the bank of one or more supercapacitor modules would need to store at least an energy of 100Wh when fully charged. The Li-ion battery has a lifetime of 3 years at ambient controlled temperature (10°C - 30°C) and 0.5 years at chilled temperature (0.5°C).

As an example, Table 4 shows the calculated charge time and discharge time at different charge currents at 48 volts applied to a commercially available supercapacitor module charged with an initial energy of 100Wh. The average power consumption over a four hour period as shown in Table 2 for a Li-ion battery is considered to be 400W. To the right of Table 4 shows the energy consumed at different depths of discharge (DoD) ranging from 33% to 100% discharge of the supercapacitor module. The calculated charging current at 48v is limited by the maximum power that can be delivered to the supercapacitor module. The commercially available supercapacitor module comes under the product name EDLC from Yunasko having a maximum rated voltage of 48v and a capacitance of 165 Farads (see Table 2). As is apparent in Table 4, the greater the charging current at 48v, the shorter the charge time. Thus, to deliver the same level of power the supercapacitor module can be charged under 5 seconds at a higher current in comparison to charging at a lower current for a longer time. Practically, the charge station delivers a current in the range 150amps to 160amps at 48v. According to Table 4, this equates to a charge time between 15 seconds to 20 seconds but only a discharge time of 5 mins (see current values in bold in Table 4). To deliver the same level of power at a lower charging current, e.g. 150amps to 160amps, whilst reducing the charge time and increasing the discharge time, the voltage across bank of supercapacitor modules is increased according to equation 3 and the DC/DC converter regulates the output voltage from the bank of supercapacitor modules to the operational voltage across the electrical load, e.g. 48v. However, this of course, is dependent on the maximum rated voltage of the supercapacitor module. As shown in Table 2, the maximum rated voltage of the supercapacitors modules ranges from 48volts to 102volts. Equally connecting one or more supercapacitor modules in series has the same desired effect of increasing the maximum rated voltage of a bank of supercapacitor modules. In comparison to batteries which can deliver a discharge time of 4 hours for 12-18 mins of charging, the use of supercapacitors would still require more frequent charging to provide the same level of operation of the load handling device on the grid framework structure. However, supercapacitors can tolerate a greater number of charging and discharging cycles and each charging cycle is short, i.e. applying frequent but short bursts of energy.

To the right of Table 4 shows the equivalent energy used at the different discharge times and the equivalent DoD of the 100Wh initial charge supercapacitor. For an average power consumption of 400W, a discharge time of 5 mins would represent a DoD of 33% and an equivalent energy of 33Wh. Likewise, 100% discharge would represents an energy of 100Wh for a 100Wh supercapacitor. As the average power consumed by the load handling device as shown in Table 3 is 400W over a four hour period, for a supercapacitor initially charged to provide 100Wh this represents a DoD of 100% at a discharge time of 15 mins, i.e. 4 x 15mins = 1 hour at 100W.

Depending on a mission of the load handing device on the grid framework structure and thus, the power consumed by the load handling device in carrying out the mission on the grid framework structure, short bursts of energy can be delivered to the supercapacitor modules by visiting one or more charge stations to top-up the supercapacitor modules sufficient to allow the load handling device to complete the mission. In comparison to the time in carrying out the mission on the grid framework structure, the charging time of the bank of supercapacitor modules represents a small proportion of this time. Since the charge time is relatively short of the order of seconds and since the supercapacitor can tolerate multiple charging cycles, it can be afforded that the load handling device can visit multiple charge stations during an operation on the grid framework structure. For example, the supercapacitor can cycle over 290K times at a DoD of 100% which equates to a service life of about 8 years, far longer than the service life of a typical battery.

**Table 4: Charge time and Discharge time for different charge currents at 48 volts and energy used (Wh) where the average power consumption is 400W.**

| Current (amps) | Charge time (secs) | | | | | | | Cycles | | |
|---|---|---|---|---|---|---|---|---|---|---|
| Discharge time (mins) | | **5secs** | **10secs** | **15secs** | **20secs** | **25secs** | **30secs** | **Energy under (Wh)** | **Depth of Discharge (DoD)** | **Cycles** |
| | **5mins** | 500 | 250 | **167** | **125** | 100 | 83 | 33 | 33% | 871k |
| | **10mins** | 1000 | 500 | 333 | 250 | 200 | 167 | 67 | 67% | 436k |
| | **12mins** | 1200 | 600 | 400 | 300 | 240 | 200 | 80 | 80% | 363k |
| | **15mins** | 1500 | 750 | 500 | 375 | 300 | 250 | 100 | 100% | 290k |

### Example 2

Montecarlo simulations were performed to establish the ratio of the operative time which is a measure of the time the load handling device is operational on the grid framework structure before the voltage across the bank of supercapacitor modules falls below a threshold voltage necessary to recharge the bank of supercapacitor modules at a charge station for a period of time or recharge time. The recharge time is a measure of the time taken to recharge the bank of supercapacitor modules to a fully charged state. In performing the Montecarlo simulations, three commercially available supercapacitor modules were investigated in performing a mission together with a distance of 28 grids cells which corresponds to a distance of 21.3 meters in the x-direction on the grid the load handling device has to travel in order to reach a charge station. The mission involves picking a container from a first grid cell and transporting the container to a second grid cell where it is delivered, i.e. lowered. In essence, a mission is a set of movements in X, Y and Z to get to a location, pick up a container or tote from a depth, move to another location and drop it to a depth. Each movement has an associated time, distance and energy consumption, which are added up to create the output from each mission. The distance to the charge station affects the amount of energy (residual) available to the load handling device for missions, as it needs to leave enough to return to the charging station and uses some afterwards coming back from it. Before "performing" the mission the load handling device will check if it has enough energy to carry it out and then get to the charge station afterwards without falling below the minimum voltage (that corresponds to a minimum threshold energy level).

**Table 5: Supercapacitor parameters in the Montecarlo simulation.**

| **Parameter** | **Supercapacitor A** | **Supercapacitor B** | **Supercapacitor C** |
|---|---|---|---|
| Maximum voltage V | 48 | 70 | 100 |
| Capacitance F | 312.5 | 147 | 72 |
| Cell distance from recharge station | 28 | 28 | 28 |

The voltage and the capacitance of Supercapacitor A, B and C are tailored by connecting one or more supercapacitor modules in series and/or parallel (see Table 5). For example, a capacitance of 312.5 is achieved for Supercapacitor A by connecting the 48v supercapacitor module, Yunasko, shown in Table 2 in parallel. A threshold voltage corresponding to the minimum input voltage related to the efficiency of the DC/DC convertor discussed above is set to 30v. The results of the Montecarlo simulations is summarised in Table 6 and plotted in Figures 15 to 18.

**Table 6: Results of Montecarlo simulation for a load handling device to perform a mission where the distance to a charge station is 28 grid cells.**

| **Simulation** | **48V** | **70V** | **100V** | **Unit** |
|---|---|---|---|---|
| Distance travelled | 537.53 | 730.30 | 817.06 | m |
| Operative Time | 10.99 | 14.91 | 16.68 | Min |
| Recharge Time | 36.10 | 43.56 | 46.92 | Secs |
| Ratio of Operative time/Recharge time | 18.27 | 20.54 | 21.33 | |
| Residual energy | 41.29 | 20.62 | 11.24 | % |

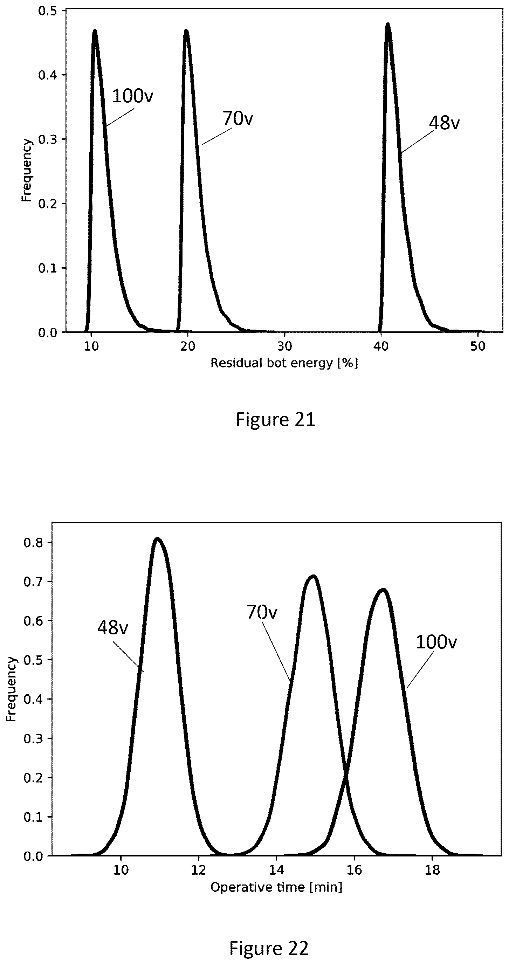

The distance travelled in Table 6 takes into account the energy needed for the load handling device to travel to a charge station which in this case is set to 28 grid cells, i.e. distance travelled = y - x, where y is the total distance travel by a load handling device and x is the distance to a charge station. It is clearly apparent from Table 6 and Figures 21 to 24, that the 100v rated supercapacitor module provides better performance in terms of distance travelled on the grid and the operative time on the grid. This is because there is more energy available in the high voltage supercapacitor above the threshold voltage than in a lower voltage supercapacitor in accordance with equation 3. The residual energy depicted in Table 6 shows the amount of energy left, below which the voltage across the assembly of supercapacitors modules reaches the threshold voltage of the DC/DC convertor below which the DC/DC is not effective. The DC/DC converter regulates the voltages from across the bank of supercapacitor modules so that the output voltage of the DC/DC converter is at the operational voltage across the electrical load, i.e. to drive the at least one motor. This is demonstrated in Table 6 by a lower residual energy for the higher voltage supercapacitor as more of the energy is available above the threshold voltage to drive the load handling device before the voltage across the supercapacitor module reaches the threshold voltage. As a result, for a higher voltage supercapacitor, the recharge time is greater because the residual energy left in the supercapacitor module is lower and as a consequence the recharge process lasts longer.

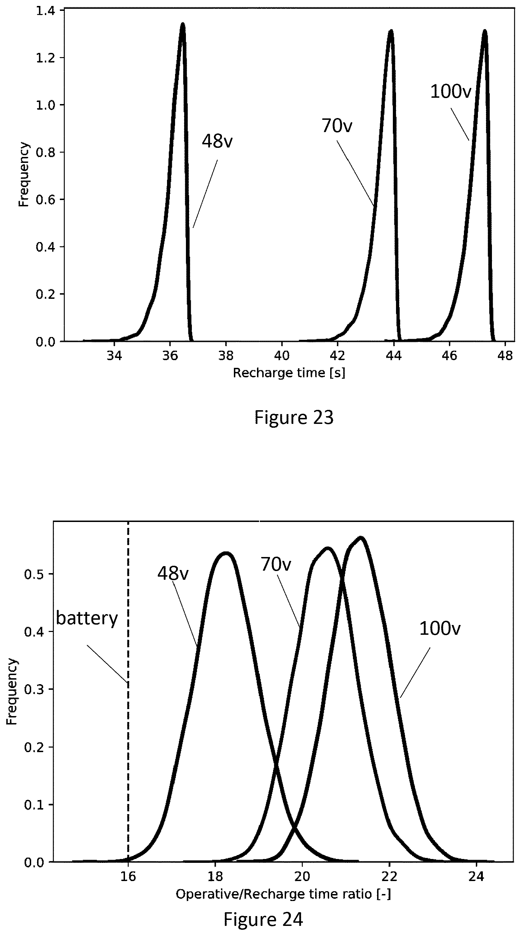

The ratio between the operative time and the recharge time (O/R) is a crucial parameter because it allows to make a comparison between a battery and the supercapacitor. For a battery, the operative time is 4 hours and the recharge time is 15 minutes on average. The average O/R for a battery is about 16 or 16:1. It is clearly apparent from Table 6 and Figure 24, where the rechargeable energy storage means comprises a bank of one or more supercapacitor modules, the ratio between the operative time and the recharge time (O/R) is greater than 16 or 16:1, preferably, between 16 to 25(16:1 to 25:1); more preferably, between 17 to 21 (17:1 to 21:1), more preferably between 18 to 21 (18:1 to 21:1). This is calculated where the load handling device has to cover a distance of 28 grid cells on the grid to reach a charge station. This ratio increases, the shorter the distance the load handling device has to travel to a charge station to recharge the bank of one or more supercapacitor modules. This is because less energy is consumed visiting a charge station.

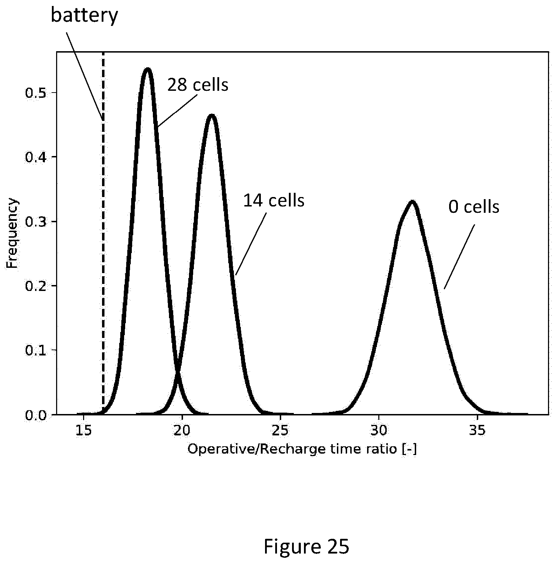

Table 7 below and the plot shown in Figure 25 shows the ratio of the operative time/recharge time (O/R) where the distance to the charge station varies from 0 grid cells, 14 grid cells and 28 grid cells for a 48v supercapacitor module. The distance to the charge station affects the amount of energy available to the load handling device for missions, as it needs to leave enough energy to return to the charging station and uses some afterwards coming back from it. As predicted, the shorter the distance to the charge station, the greater the O/R ratio since less energy is expended to travel to a charge station. The dashed line in Figure 25 represents the O/R ratio of a Li-ion battery. For a supercapacitor module operating at an initial voltage of 48volts, the O/R ratio varies from 18.27 (18.27:1) where the distance to a charge station is 28 cells to over 30 (30:1) where the distance to the charge station is 0, i.e. the load handling device does not need to take a detour to visit a charge station.

**Table 7: Results of Montecarlo simulation for a load handling device to perform a mission where the distance to a charge station varies form 0 cells to 28 cells.**

| **Simulation** | **48V** | **48V** | **48V** | **Unit** |
|---|---|---|---|---|
| Cell distance from recharge station | 0 | 14 | 28 | |
| Distance travelled | 553.17 | 539.14 | 537.53 | m |
| Operative Time | 11.32 | 11.03 | 10.99 | Min |
| Recharge Time | 21.44 | 30.77 | 36.10 | Secs |
| Ratio of Operative time/Recharge time | 31.68 | 21.51 | 18.27 | |
| Residual energy | 40.44 | 41.21 | 41.29 | % |

## Claims

1. A load handling device (30) for lifting and moving one or more containers (10) stacked in a storage system comprising a grid framework structure (14) supporting a pathway arranged in a grid pattern above the stacks (12) of containers (10), the load handling device (30) comprising:
i) a vehicle body (32) housing a driving mechanism operatively arranged for moving the load handling device (30) on the grid framework structure (14);
ii) a lifting device comprising a lifting drive assembly and a grabber device (39) configured, in use, to releasably grip a container (10) when in a lowered position and lift the container (10) from the stack (12) into a container-receiving space (40) when in a raised position; wherein the lifting drive assembly and/or the driving mechanism comprises at least one motor forming an electrical load (68);
iii) a rechargeable energy storage means (62) for providing energy to power the electrical load (68);
iv) a charging system (60) comprising a first part (64) for charging the rechargeable energy storage means (62) comprising at least one electrical charge receiving element (70) arranged on the vehicle body (32) and a second part (66) for delivering energy from the rechargeable energy storage means (62) to the electrical load (68), **characterised in that** the second part (66) of the charging system comprises a DC/DC converter (74) positioned between the rechargeable energy storage means (62) and the electrical load (68) such that the DC/DC converter (74) is configured to supply a predetermined DC voltage across the electrical load (68);
characterised further **in that** the load handling device (30) comprises:
v) an auxiliary rechargeable energy storage means (102), wherein the electrical load (68) is shared between the rechargeable energy storage means (62) and the auxiliary rechargeable energy storage means (102), wherein the grabber device (39) comprises the auxiliary rechargeable energy storage means 102;
wherein the vehicle body (32) comprises a wireless charging transmitter coil and the grabber device (39) comprises a wireless charging receiver coil for inductively coupling with the wireless charging transmitter coil when the grabber device (39) is in the raised position.

2. The load handling device (30) of claim 1, wherein the auxiliary rechargeable energy storage means (102) comprises one or more batteries and/or one or more supercapacitor modules.

3. The load handling device (30) of claim 1 or claim 2, wherein the rechargeable energy storage means (62) is a rechargeable battery.

4. The load handling device (30) of claim 1 or claim 2, wherein the rechargeable energy storage means (62) is an assembly of one or more supercapacitor modules.

5. The load handling device 30 of claim 4, wherein the first part of the charging system (64) further comprises an isolating switch (84) positioned between the at least one electrical charge receiving element (70) and the assembly of one or more supercapacitor modules and wherein a controller is operative to actuate the isolating switch (84) to isolate the at least one electrical charge receiving element (70) from the assembly of one or more supercapacitor modules, OPTIONALLY wherein the controller is configured to actuate the isolating switch (84) in response to a voltage across the assembly of one or more supercapacitor modules reaching a predetermined charge voltage.

6. The load handling device (30) of claim 4 or claim 5, wherein the second part (66) of the charging system comprises a bypass switch (88) having a first position to allow electrical energy from the assembly of one or more supercapacitor modules to flow through the DC/DC converter (74) and a second position to bypass the DC/DC converter (74) such that electrical energy regenerated from the electrical load (68) bypasses the DC/DC converter (74) to the assembly of one or more supercapacitor modules.

7. The load handling device (30) of claim 6, further comprising a control unit (86) operative to actuate the bypass switch (88) from the first position to the second position,
OPTIONALLY wherein the control unit (86) is operative to actuate the bypass switch (88) from the first position to the second position when the voltage across the electrical load (68) exceeds a predetermined voltage.

8. The load handling device (30) of any of claims 4 to 6, wherein th DC/DC converter(74) is
a first DC converter (74) and the first part (64) of the charging system (60) comprises a second DC/DC (82) converter upstream of the first DC/DC converter (74), said second DC/DC converter (82) being positioned between the at least one charge receiving element (70) and the assembly of one or more supercapacitor modules,
OPTIONALLY wherein the assembly of one or more supercapacitor modules (62) is a first assembly of one or more supercapacitor modules and the load handling device further comprises a second rechargeable energy storage means (100) downstream of the first assembly of one or more supercapacitor modules, said second rechargeable energy storage means (100) is positioned between the first DC/DC converter (74) and the electrical load (68) such that first DC/DC converter (74) is configured to supply a predetermined voltage across the second rechargeable energy storage means (100).

9. The load handling device (30) of any preceding claim, wherein the grabber device (39) comprises a frame comprising four corner sections, a top side and a bottom side and at least two gripper elements (106) for engaging with a container (10), the lifting drive assembly comprises a winch mechanism comprising a winch cable (38) having one end wound on a spool or reel and a second end connected to the grabber device (39) such that the lifting drive assembly is arranged to move the grabber device (39) in a vertical direction from a raised position within the vehicle body (32) to a lowered position, and wherein the electrical load (68) further comprises one or more rotary solenoids for actuating each of the at least two gripper elements (106),
OPTIONALLY wherein the auxiliary rechargeable energy storage means (102) is mounted to the frame.

10. The load handling device of any of claims 4 to 9, wherein the first part of the charging system further comprises an AC/DC convertor such that the at least one electrical charge receiving element is configured for receiving power from an AC power supply,
OPTIONALLY wherein the AC/DC converter is a three phase rectifier such that the at least one electrical charge receiving element comprises three electrical charge receiving contact surfaces for electrically coupling to a three electrical charge providing contact surfaces of a three phase AC electrical power source,

11. The load handling device of claim 10, wherein the at least one electrical charge receiving element comprises a wireless charging receiver coil for inductively coupling with a wireless charging transmitter coil.

12. A storage system comprising:
i) a grid framework structure (14) comprising a plurality of upright columns (16) arranged to form a plurality of vertical storage locations for one or more containers (10 to be stacked between the upright columns (16) and be guided by the upright columns (16) in a vertical direction, wherein the plurality of upright columns (16) are interconnected at their top ends by a first set of grid members (18) extending in a first direction and a second set of grid members (20) extending in a second direction, the second set of grid members (20) running transversely to the first set of grid members (18) in a substantially horizontal plane to form a grid structure comprising a plurality of grid cells (23);
ii) one or more load handling devices (30) for lifting and moving containers (10) stacked in the grid framework structure (14), each of the one or more load handling devices (30) comprising the load handling device (30) as defined in any of the claims 4 to 10,
iii) a charge station (50) comprising a charge head (52) for electrically coupling with the at least one electrical charge receiving element (70) of the load handling device (30).

13. A storage system comprising:
i) a grid framework structure (14) comprising a plurality of upright columns (16) arranged to form a plurality of vertical storage locations for one or more containers (10) to be stacked between the upright columns (16) and be guided by the upright columns (16) in a vertical direction, wherein the plurality of upright columns (16) are interconnected at their top ends by a first set of grid members (18) extending in a first direction and a second set of grid members (20) extending in a second direction, the second set of grid members (20) running transversely to the first set of grid members (18) in a substantially horizontal plane to form a grid structure comprising a plurality of grid cells (23);
ii) one or more load handling devices (30) for lifting and moving containers (10) stacked in the grid framework structure (14), each of the one or more load handling devices (30) comprising the load handling device (30) as defined in claim 11,
iii) a charge station (50) comprising a charge head (52) electrically coupled to an AC power source, said charge head (52) comprising a wireless charging transmitter coil for inductively coupling with the wireless charging receiver coil of the load handling device (30).

14. A method of operating a load handling device (30) in a storage system as defined in claim 12 or claim 13, comprising the steps of:
i) charging the assembly of one or more supercapacitor modules having a voltage limit in the range 48V to 100V for a duration of time defined as the recharge time,
ii) visiting a first grid cell,
iii) lifting a container (10) from the first grid cell,
iv) transporting the container (10) to a second grid cell,
v) lowering the container (10) into the second grid cell,
vi) repeating steps (ii) to (v) for an operative time until the voltage across the assembly of one or more supercapacitor modules reaches a predetermined threshold voltage,
vii) regulating the voltage across the assembly of supercapacitors by a DC/DC converter such that the predetermined threshold voltage is in the range of 10-50% of the voltage limit of the assembly of one or more supercapacitors.

15. The method of claim 14, wherein the distance between the load handling device and the charge station is in the range 0 - 28 grid cells.

## Patentansprüche

1. Lasthandhabungsvorrichtung (30) zum Heben und Bewegen eines oder mehrerer Behälter (10), die in einem Lagersystem gestapelt sind, das eine Gittergerüststruktur (14) umfasst, die einen in einem Gittermuster angeordneten Weg über den Stapeln (12) von Behältern (10) trägt, wobei die Lasthandhabungsvorrichtung (30) umfasst:
i) eine Fahrzeugkarosserie (32), die einen Antriebsmechanismus beherbergt, der funktionsfähig zum Bewegen der Lasthandhabungsvorrichtung (30) auf der Gittergerüststruktur (14) angeordnet ist;
ii) eine Hebevorrichtung, umfassend eine Hebeantriebsbaugruppe und eine Greifervorrichtung (39), die im Gebrauch konfiguriert ist, einen Behälter (10) in einer abgesenkten Stellung lösbar zu greifen und den Behälter (10) aus dem Stapel (12) in einen Behälteraufnahmeraum (40) in einer angehobenen Stellung zu heben; wobei die Hebeantriebsbaugruppe und/oder der Antriebsmechanismus mindestens einen Motor umfasst, der eine elektrische Last (68) bildet;
iii) ein wiederaufladbares Energiespeichermittel (62) zum Bereitstellen von Energie zum Versorgen der elektrischen Last (68);
iv) ein Ladesystem (60), umfassend einen ersten Teil (64) zum Laden des wiederaufladbaren Energiespeichermittels (62), umfassend mindestens ein elektrisches Ladeaufnahmeelement (70), das an der Fahrzeugkarosserie (32) angeordnet ist, und einen zweiten Teil (66) zum Liefern von Energie von dem wiederaufladbaren Energiespeichermittel (62) an die elektrische Last (68), **dadurch gekennzeichnet, dass** der zweite Teil (66) des Ladesystems einen DC/DC-Wandler (74) umfasst, der zwischen dem wiederaufladbaren Energiespeichermittel (62) und der elektrischen Last (68) positioniert ist, so dass der DC/DC-Wandler (74) konfiguriert ist, eine vorbestimmte Gleichspannung über die elektrische Last (68) zu liefern; ferner **dadurch gekennzeichnet, dass** die Lasthandhabungsvorrichtung (30) umfasst:
v) ein zusätzliches wiederaufladbares Energiespeichermittel (102), wobei die elektrische Last (68) zwischen dem wiederaufladbaren Energiespeichermittel (62) und dem zusätzlichen wiederaufladbaren Energiespeichermittel (102) aufgeteilt ist, wobei die Greifervorrichtung (39) das zusätzliche wiederaufladbare Energiespeichermittel 102 umfasst;
wobei die Fahrzeugkarosserie (32) eine drahtlose Ladesendespule umfasst und die Greifervorrichtung (39) eine drahtlose Ladeempfangsspule zum induktiven Koppeln mit der drahtlosen Ladesendespule umfasst, wenn sich die Greifervorrichtung (39) in der angehobenen Stellung befindet.

2. Lasthandhabungsvorrichtung (30) nach Anspruch 1, wobei das zusätzliche wiederaufladbare Energiespeichermittel (102) eine oder mehrere Batterien und/oder ein oder mehrere Superkondensatormodule umfasst.

3. Lasthandhabungsvorrichtung (30) nach Anspruch 1 oder Anspruch 2, wobei das wiederaufladbare Energiespeichermittel (62) eine wiederaufladbare Batterie ist.

4. Lasthandhabungsvorrichtung (30) nach Anspruch 1 oder Anspruch 2, wobei das wiederaufladbare Energiespeichermittel (62) eine Baugruppe aus einem oder mehreren Superkondensatormodulen ist.

5. Lasthandhabungsvorrichtung 30 nach Anspruch 4, wobei der erste Teil des Ladesystems (64) ferner einen Trennschalter (84) umfasst, der zwischen dem mindestens einen elektrischen Ladeaufnahmeelement (70) und der Baugruppe aus einem oder mehreren Superkondensatormodulen positioniert ist, und wobei ein Controller betriebsfähig ist, den Trennschalter (84) zu betätigen, um das mindestens eine elektrische Ladeaufnahmeelement (70) von der Baugruppe aus einem oder mehreren Superkondensatormodulen zu isolieren,
OPTIONAL wobei der Controller konfiguriert ist, den Trennschalter (84) als Reaktion darauf zu betätigen, dass eine Spannung über der Baugruppe aus einem oder mehreren Superkondensatormodulen eine vorbestimmte Ladespannung erreicht.

6. Lasthandhabungsvorrichtung (30) nach Anspruch 4 oder Anspruch 5, wobei der zweite Teil (66) des Ladesystems einen Überbrückungsschalter (88) umfasst, der eine erste Stellung aufweist, um elektrische Energie von der Baugruppe aus einem oder mehreren Superkondensatormodulen durch den DC/DC-Wandler (74) fließen zu lassen, und eine zweite Stellung, um den DC/DC-Wandler (74) zu überbrücken, so dass von der elektrischen Last (68) rückgewonnene elektrische Energie den DC/DC-Wandler (74) zu der Baugruppe aus einem oder mehreren Superkondensatormodulen umgeht.

7. Lasthandhabungsvorrichtung (30) nach Anspruch 6, ferner umfassend eine Steuereinheit (86), die betriebsfähig ist, den Überbrückungsschalter (88) von der ersten Stellung in die zweite Stellung zu betätigen,
OPTIONAL wobei die Steuereinheit (86) betriebsfähig ist, den Überbrückungsschalter (88) von der ersten Stellung in die zweite Stellung zu betätigen, wenn die Spannung über der elektrischen Last (68) eine vorbestimmte Spannung übersteigt.

8. Lasthandhabungsvorrichtung (30) nach einem der Ansprüche 4 bis 6, wobei der DC/DC-Wandler (74) ein erster DC-Wandler (74) ist und der erste Teil (64) des Ladesystems (60) einen zweiten DC/DC-Wandler (82) vorgeschaltet zu dem ersten DC/DC-Wandler (74) umfasst, wobei der zweite DC/DC-Wandler (82) zwischen dem mindestens einen Ladeaufnahmeelement (70) und der Baugruppe aus einem oder mehreren Superkondensatormodulen positioniert ist,
OPTIONAL wobei die Baugruppe aus einem oder mehreren Superkondensatormodulen (62) eine erste Baugruppe aus einem oder mehreren Superkondensatormodulen ist und die Lasthandhabungsvorrichtung ferner ein zweites wiederaufladbares Energiespeichermittel (100) nachgeschaltet zu der ersten Baugruppe aus einem oder mehreren Superkondensatormodulen umfasst, wobei das zweite wiederaufladbare Energiespeichermittel (100) zwischen dem ersten DC/DC-Wandler (74) und der elektrischen Last (68) positioniert ist, so dass der erste DC/DC-Wandler (74) konfiguriert ist, eine vorbestimmte Spannung über das zweite wiederaufladbare Energiespeichermittel (100) zu liefern.

9. Lasthandhabungsvorrichtung (30) nach einem der vorhergehenden Ansprüche, wobei die Greifervorrichtung (39) einen Rahmen umfasst, der vier Eckabschnitte, eine Oberseite und eine Unterseite und mindestens zwei Greiferelemente (106) zum Eingreifen in einen Behälter (10) umfasst, die Hebeantriebsbaugruppe einen Windenmechanismus umfasst, der ein Windenseil (38) umfasst, das ein auf einer Trommel oder Rolle aufgewickeltes Ende und ein zweites mit der Greifervorrichtung (39) verbundenes Ende aufweist, so dass die Hebeantriebsbaugruppe angeordnet ist, die Greifervorrichtung (39) in einer vertikalen Richtung von einer angehobenen Stellung innerhalb der Fahrzeugkarosserie (32) in eine abgesenkte Stellung zu bewegen, und wobei die elektrische Last (68) ferner einen oder mehrere Drehmagnete zum Betätigen jedes der mindestens zwei Greiferelemente (106) umfasst,
OPTIONAL wobei das zusätzliche wiederaufladbare Energiespeichermittel (102) an dem Rahmen montiert ist.

10. Lasthandhabungsvorrichtung nach einem der Ansprüche 4 bis 9, wobei der erste Teil des Ladesystems ferner einen AC/DC-Wandler umfasst, so dass das mindestens eine elektrische Ladeaufnahmeelement zum Empfangen von Leistung von einer Wechselstromversorgung konfiguriert ist,
OPTIONAL wobei der AC/DC-Wandler ein Dreiphasengleichrichter ist, so dass das mindestens eine elektrische Ladeaufnahmeelement drei elektrische Ladeaufnahmekontaktflächen zum elektrischen Koppeln mit drei elektrischen Ladeabgabekontaktflächen einer dreiphasigen Wechselstromquelle umfasst,

11. Lasthandhabungsvorrichtung nach Anspruch 10, wobei das mindestens eine elektrische Ladeaufnahmeelement eine drahtlose Ladeempfangsspule zum induktiven Koppeln mit einer drahtlosen Ladesendespule umfasst.

12. Lagersystem, umfassend:
i) eine Gittergerüststruktur (14), umfassend eine Mehrzahl von aufrechten Säulen (16), die angeordnet sind, eine Mehrzahl von vertikalen Lagerplätzen zu bilden, damit ein oder mehrere Behälter (10) zwischen den aufrechten Säulen (16) gestapelt werden und durch die aufrechten Säulen (16) in einer vertikalen Richtung geführt werden, wobei die Mehrzahl von aufrechten Säulen (16) an ihren oberen Enden durch einen ersten Satz von Gittergliedern (18), der sich in einer ersten Richtung erstreckt, und einen zweiten Satz von Gittergliedern (20), der sich in einer zweiten Richtung erstreckt, miteinander verbunden sind, wobei der zweite Satz von Gittergliedern (20) quer zu dem ersten Satz von Gittergliedern (18) in einer im Wesentlichen horizontalen Ebene verläuft, um eine Gitterstruktur zu bilden, die eine Mehrzahl von Gitterzellen (23) umfasst;
ii) eine oder mehrere Lasthandhabungsvorrichtungen (30) zum Heben und Bewegen von Behältern (10), die in der Gittergerüststruktur (14) gestapelt sind, wobei jede der einen oder mehreren Lasthandhabungsvorrichtungen (30) die Lasthandhabungsvorrichtung (30) wie in einem der Ansprüche 4 bis 10 definiert umfasst,
iii) eine Ladestation (50), umfassend einen Ladekopf (52) zum elektrischen Koppeln mit dem mindestens einen elektrischen Ladeaufnahmeelement (70) der Lasthandhabungsvorrichtung (30).

13. Lagersystem, umfassend:
i) eine Gittergerüststruktur (14), umfassend eine Mehrzahl von aufrechten Säulen (16), die angeordnet sind, eine Mehrzahl von vertikalen Lagerplätzen zu bilden, damit ein oder mehrere Behälter (10) zwischen den aufrechten Säulen (16) gestapelt werden und durch die aufrechten Säulen (16) in einer vertikalen Richtung geführt werden, wobei die Mehrzahl von aufrechten Säulen (16) an ihren oberen Enden durch einen ersten Satz von Gittergliedern (18), der sich in einer ersten Richtung erstreckt, und einen zweiten Satz von Gittergliedern (20), der sich in einer zweiten Richtung erstreckt, miteinander verbunden sind, wobei der zweite Satz von Gittergliedern (20) quer zu dem ersten Satz von Gittergliedern (18) in einer im Wesentlichen horizontalen Ebene verläuft, um eine Gitterstruktur zu bilden, die eine Mehrzahl von Gitterzellen (23) umfasst;
ii) eine oder mehrere Lasthandhabungsvorrichtungen (30) zum Heben und Bewegen von Behältern (10), die in der Gittergerüststruktur (14) gestapelt sind, wobei jede der einen oder mehreren Lasthandhabungsvorrichtungen (30) die Lasthandhabungsvorrichtung (30) wie in Anspruch 11 definiert umfasst,
iii) eine Ladestation (50), umfassend einen Ladekopf (52), der elektrisch mit einer Wechselstromquelle gekoppelt ist, wobei der Ladekopf (52) eine drahtlose Ladesendespule zum induktiven Koppeln mit der drahtlosen Ladeempfangsspule der Lasthandhabungsvorrichtung (30) umfasst.

14. Verfahren zum Betreiben einer Lasthandhabungsvorrichtung (30) in einem Lagersystem wie in Anspruch 12 oder Anspruch 13 definiert, umfassend die Schritte:
i) Laden der Baugruppe aus einem oder mehreren Superkondensatormodulen, die eine Spannungsgrenze im Bereich von 48 V bis 100 V aufweisen, für eine als Wiederaufladezeit definierte Zeitdauer,
ii) Anfahren einer ersten Gitterzelle,
iii) Heben eines Behälters (10) aus der ersten Gitterzelle,
iv) Transportieren des Behälters (10) zu einer zweiten Gitterzelle,
v) Absenken des Behälters (10) in die zweite Gitterzelle,
vi) Wiederholen der Schritte (ii) bis (v) für eine Betriebszeit, bis die Spannung über der Baugruppe aus einem oder mehreren Superkondensatormodulen eine vorbestimmte Schwellenspannung erreicht,
vii) Regeln der Spannung über der Baugruppe aus Superkondensatoren durch einen DC/DC-Wandler, sodass die vorbestimmte Schwellenspannung im Bereich von 10-50 % der Spannungsgrenze der Baugruppe aus einem oder mehreren Superkondensatoren liegt.

15. Verfahren nach Anspruch 14, wobei der Abstand zwischen der Lasthandhabungsvorrichtung und der Ladestation im Bereich von 0-28 Gitterzellen liegt.

## Revendications

1. Dispositif de manipulation de charge (30) destiné à lever et déplacer un ou plusieurs conteneurs (10) empilés dans un système de stockage comprenant une structure de cadre de grille (14) supportant un trajet agencé selon un motif de grille au-dessus des piles (12) de conteneurs (10), le dispositif de manipulation de charge (30) comprenant :
i) une carrosserie de véhicule (32) logeant un mécanisme d'entraînement agencé fonctionnellement destiné à déplacer le dispositif de manipulation de charge (30) sur la structure de cadre de grille (14) ;
ii) un dispositif de levage comprenant un ensemble d'entraînement de levage et un dispositif de préhension (39) configuré, en utilisation, pour saisir de manière libérable un conteneur (10) lorsqu'il est dans une position abaissée et lever le conteneur (10) de la pile (12) dans un espace de réception de conteneurs (40) lorsqu'il est dans une position levée ; dans lequel l'ensemble d'entraînement de levage et/ou le mécanisme d'entraînement comprend au moins un moteur formant une charge électrique (68) ;
iii) un moyen de stockage d'énergie rechargeable (62) destiné à fournir de l'énergie afin d'alimenter la charge électrique (68) ;
iv) un système de charge (60) comprenant une première partie (64) destiné à charger le moyen de stockage d'énergie rechargeable (62) comprenant au moins un élément de réception de charge électrique (70) agencé sur la carrosserie de véhicule (32) et une seconde partie (66) destinée à fournir de l'énergie du moyen de stockage d'énergie rechargeable (62) à la charge électrique (68), **caractérisé en ce que** la seconde partie (66) du système de charge comprend un convertisseur CC/CC (74) positionné entre le moyen de stockage d'énergie rechargeable (62) et la charge électrique (68) de sorte que le convertisseur CC/CC (74) soit configuré pour fournir une tension CC prédéterminée à travers la charge électrique (68) ; **caractérisé en outre en ce que** le dispositif de manipulation de charge (30) comprend :
v) un moyen de stockage d'énergie rechargeable auxiliaire (102), dans lequel la charge électrique (68) est partagée entre le moyen de stockage d'énergie rechargeable (62) et le moyen de stockage d'énergie rechargeable auxiliaire (102), dans lequel le dispositif de préhension (39) comprend le moyen de stockage d'énergie rechargeable auxiliaire (102) ;
dans lequel la carrosserie de véhicule (32) comprend une bobine émettrice de charge sans fil et le dispositif de préhension (39) comprend une bobine réceptrice de charge sans fil destinée à se coupler inductivement avec la bobine émettrice de charge sans fil lorsque le dispositif de préhension (39) est dans la position levée.

2. Dispositif de manipulation de charge (30) selon la revendication 1, dans lequel le moyen de stockage d'énergie rechargeable auxiliaire (102) comprend une ou plusieurs batteries et/ou un ou plusieurs modules de supercondensateurs.

3. Dispositif de manipulation de charge (30) selon la revendication 1 ou la revendication 2, dans lequel le moyen de stockage d'énergie rechargeable (62) est une batterie rechargeable.

4. Dispositif de manipulation de charge (30) selon la revendication 1 ou la revendication 2, dans lequel le moyen de stockage d'énergie rechargeable (62) est un ensemble d'un ou de plusieurs modules de supercondensateurs.

5. Dispositif de manipulation de charge (30) selon la revendication 4, dans lequel la première partie du système de charge (64) comprend en outre un sectionneur (84) positionné entre le au moins un élément de réception de charge électrique (70) et l'ensemble d'un ou de plusieurs modules de supercondensateurs, et dans lequel un dispositif de commande sert à actionner le sectionneur (84) afin d'isoler le au moins un élément de réception de charge électrique (70) de l'ensemble d'un ou de plusieurs modules de supercondensateurs, ÉVENTUELLEMENT dans lequel le dispositif de commande est configuré pour actionner le sectionneur (84) en réponse à une tension à travers l'ensemble d'un ou de plusieurs modules de supercondensateurs atteignant une tension de charge prédéterminée.

6. Dispositif de manipulation de charge (30) selon la revendication 4 ou la revendication 5, dans lequel la seconde partie (66) du système de charge comprend un commutateur de dérivation (88) présentant une première position pour permettre à l'énergie électrique provenant de l'ensemble d'un ou de plusieurs modules de supercondensateurs de circuler à travers le convertisseur CC/CC (74) et une seconde position pour contourner le convertisseur CC/CC (74) de sorte que l'énergie électrique régénérée à partir de la charge électrique (68) contourne le convertisseur CC/CC (74) vers l'ensemble d'un ou de plusieurs modules de supercondensateurs.

7. Dispositif de manipulation de charge (30) selon la revendication 6, comprenant en outre une unité de commande (86) permettant d'actionner le commutateur de dérivation (88) de la première position à la seconde position, ÉVENTUELLEMENT dans lequel l'unité de commande (86) sert à actionner le commutateur de dérivation (88) de la première position à la seconde position lorsque la tension à travers la charge électrique (68) dépasse une tension prédéterminée.

8. Dispositif de manipulation de charge (30) selon l'une quelconque des revendications 4 à 6, dans lequel le convertisseur CC/CC (74) est un premier convertisseur CC (74) et la première partie (64) du système de charge (60) comprend un second convertisseur CC/CC (82) en amont du premier convertisseur CC/CC (74), ledit second convertisseur CC/CC (82) étant positionné entre le au moins un élément de réception de charge (70) et l'ensemble d'un ou de plusieurs modules de supercondensateurs,
ÉVENTUELLEMENT dans lequel l'ensemble d'un ou de plusieurs modules de supercondensateurs (62) est un premier ensemble d'un ou de plusieurs modules de supercondensateurs et le dispositif de manipulation de charge comprend en outre un second moyen de stockage d'énergie rechargeable (100) en aval du premier ensemble d'un ou de plusieurs modules de supercondensateurs, ledit second moyen de stockage d'énergie rechargeable (100) est positionné entre le premier convertisseur CC/CC (74) et la charge électrique (68) de sorte que le premier convertisseur CC/CC (74) soit configuré pour fournir une tension prédéterminée à travers le second moyen de stockage d'énergie rechargeable (100).

9. Dispositif de manipulation de charge (30) selon une quelconque revendication précédente, dans lequel le dispositif de préhension (39) comprend un cadre comprenant quatre sections d'angle, une face supérieure et une face inférieure, et au moins deux éléments de préhension (106) destinés à entrer en prise avec un conteneur (10), l'ensemble d'entraînement de levage comprend un mécanisme de treuil comprenant un câble de treuil (38) présentant une extrémité enroulée sur une bobine ou un tambour et une seconde extrémité reliée au dispositif de préhension (39), de sorte que le mécanisme de levage soit agencé pour déplacer le dispositif de préhension (39) dans une direction verticale d'une position levée à l'intérieur de la carrosserie de véhicule (32) à une position abaissée, et dans lequel la charge électrique (68) comprend en outre un ou plusieurs solénoïdes rotatifs pour actionner chacun des au moins deux éléments de préhension (106).
ÉVENTUELLEMENT dans lequel le moyen de stockage d'énergie rechargeable auxiliaire (102) est monté sur le cadre.

10. Dispositif de manipulation de charge selon l'une quelconque des revendications 4 à 9, dans lequel la première partie du système de charge comprend en outre un convertisseur CA/CC de sorte que le au moins un élément de réception de charge électrique soit configuré pour recevoir de l'énergie d'une alimentation électrique CA,
ÉVENTUELLEMENT dans lequel le convertisseur CA/CC est un redresseur triphasé de sorte que le au moins un élément de réception de charge électrique comprenne trois surfaces de contact de réception de charge électrique destinées à se coupler électriquement à trois surfaces de contact de fourniture de charge électrique d'une source d'alimentation électrique CA triphasée.

11. Dispositif de manipulation de charge selon la revendication 10, dans lequel le au moins un élément de réception de charge électrique comprend une bobine réceptrice de charge sans fil destinée à se coupler par induction avec une bobine émettrice de charge sans fil.

12. Système de stockage comprenant :
i) une structure de cadre de grille (14) comprenant une pluralité de colonnes verticales (16) agencées pour former une pluralité d'emplacements de stockage vertical pour un ou plusieurs conteneurs (10) destinés à être empilés entre les colonnes verticales (16) et à être guidés par les colonnes verticales (16) dans une direction verticale, dans lequel la pluralité de colonnes verticales (16) sont interconnectées au niveau de leurs extrémités supérieures par un premier ensemble d'éléments de grille (18) s'étendant dans une première direction et un second ensemble d'éléments de grille (20) s'étendant dans une seconde direction, le second ensemble d'éléments de grille (20) s'étendant transversalement par rapport au premier ensemble d'éléments de grille (18) dans un plan sensiblement horizontal pour former une structure de grille comprenant une pluralité de cellules de grille (23) ;
ii) un ou plusieurs dispositifs de manipulation de charge (30) pour lever et déplacer des conteneurs (10) empilés dans la structure de cadre de grille (14), chacun du un ou des plusieurs dispositifs de manipulation de charge (30) comprenant le dispositif de manipulation de charge (30) tel que défini dans l'une quelconque des revendications 4 à 10,
iii) une station de charge (50) comprenant une tête de charge (52) destinée à se coupler électriquement avec le au moins un élément de réception de charge électrique (70) du dispositif de manipulation de charge (30).

13. Système de stockage comprenant :
i) une structure de cadre de grille (14) comprenant une pluralité de colonnes verticales (16) agencées pour former une pluralité d'emplacements de stockage vertical pour un ou plusieurs conteneurs (10) destinés à être empilés entre les colonnes verticales (16) et à être guidés par les colonnes verticales (16) dans une direction verticale, dans lequel la pluralité de colonnes verticales (16) sont interconnectées au niveau de leurs extrémités supérieures par un premier ensemble d'éléments de grille (18) s'étendant dans une première direction et un second ensemble d'éléments de grille (20) s'étendant dans une seconde direction, le second ensemble d'éléments de grille (20) s'étendant transversalement par rapport au premier ensemble d'éléments de grille (18) dans un plan sensiblement horizontal pour former une structure de grille comprenant une pluralité de cellules de grille (23) ;
ii) un ou plusieurs dispositifs de manipulation de charge (30) destinés à lever et déplacer des conteneurs (10) empilés dans la structure de cadre de grille (14), chacun du un ou des plusieurs dispositifs de manipulation de charge (30) comprenant le dispositif de manipulation de charge (30) tel que défini dans la revendication 11,
iii) une station de charge (50) comprenant une tête de charge (52) couplée électriquement à une source d'alimentation CA, ladite tête de charge (52) comprenant une bobine émettrice de charge sans fil destinée à se coupler inductivement avec la bobine réceptrice de charge sans fil du dispositif de manipulation de charge (30).

14. Procédé de fonctionnement d'un dispositif de manipulation de charge (30) dans un système de stockage tel que défini dans la revendication 12 ou la revendication 13, comprenant les étapes consistant à :
i) charger l'ensemble d'un ou de plusieurs modules de supercondensateurs présentant une limite de tension comprise dans la plage de 48 V à 100 V pendant une durée définie comme le temps de recharge,
ii) visiter une première cellule de grille,
iii) lever un conteneur (10) à partir de la première cellule de grille,
iv) transporter le conteneur (10) vers une seconde cellule de grille,
v) abaisser le conteneur (10) dans la seconde cellule de grille,
vi) répéter les étapes (ii) à (v) pendant une durée opératoire jusqu'à ce que la tension à travers l'ensemble d'un ou de plusieurs modules de supercondensateurs atteigne une tension de seuil prédéterminée,
vii) réguler la tension à travers l'ensemble de supercondensateurs par un convertisseur CC/CC de sorte que la tension de seuil prédéterminée soit dans la plage de 10 % à 50 % de la limite de tension de l'ensemble d'un ou de plusieurs supercondensateurs.

15. Procédé selon la revendication 14, dans lequel la distance entre le dispositif de manipulation de charge et la station de charge est comprise dans la plage de 0 à 28 cellules de grille.
